# EUROPEAN PATENT SPECIFICATION

(11) **EP 3 798 481 B1**
(45) Date of publication and mention of the grant of the patent: **24.05.2023**
(21) Application number: 19811342.5
(22) Date of filing: 30.05.2019
(51) Int. Cl.: F16H 61/32, B62M 25/08, F16H 3/089, F16H 63/18, F16D 28/00, F16H 61/682, F16H 57/02, F16D 23/12

(54) **STRADDLED VEHICLE**
GRÄTSCHSITZFAHRZEUG
VÉHICULE À SELLE

(30) Priority: 01.06.2018 JP 2018105909
(43) Date of publication of application: 31.03.2021
(73) Proprietor: YAMAHA HATSUDOKI KABUSHIKI KAISHA, Iwata-shi Shizuoka 438-8501 (JP)
(72) Inventor: TAKEUCHI, Yoshihiko, Iwata-shi Shizuoka 4388501 (JP)
(74) Representative: Stöckeler, Ferdinand
(86) International application number: PCT/JP2019/021612
(87) International publication number: WO 2019/230914

(56) References cited:
- JP-A- S6 334 358
- JP-U- 3 158 452
- JP-U- 3 158 452
- US-A1- 2016 288 879
- US-A1- 2016 288 879
- US-A1- 2017 350 506
- US-A1- 2017 350 506

## Description

### Technical Field

The present invention relates to a straddled vehicle.

### Background Art

Patent Literature 1 (hereinafter, referred to as PTL 1) discloses a motorcycle including an engine and an automatic transmission device. The automatic transmission device includes a clutch, a clutch motor functioning as a clutch actuator for controlling an operation of the clutch, and an operation power transmission mechanism for transmitting operation power from the clutch motor to the clutch. The clutch motor and the operation power transmission mechanism are disposed above the crankcase, in rear of the cylinder of the engine. That is, the clutch motor and the operation power transmission mechanism are disposed outside the crankcase.

The clutch motor has a shaft whose distal end is provided with a worm gear. The worm gear is engaged with a sector gear of the operation power transmission mechanism. The operation power transmission mechanism includes the sector gear, a lever member, a first coupling member, a second coupling member disposed coaxially to the first coupling member, a coil spring disposed between the first coupling member and the second coupling member, a driving lever, and a clutch disconnection rod. The sector gear rotates along with rotation of the worm gear. The lever member is integrated with the sector gear, has a substantial V-shape, and is configured to rotate along with rotation of the sector gear. The first coupling member is designed to be pushed by the lever member that is rotating. When the first coupling member is pushed by the lever member, the coil spring is compressed. By a biasing force of the coil spring, the second coupling member is pushed out so as to be separated away from the first coupling member. When the second coupling member is pushed out, the driving lever rotates. The rotation of the driving lever pushes out the clutch disconnection rod. Consequently, the clutch is disconnected.

Patent Literature 2 (hereinafter, referred to as PTL 2) discloses a mechanism including a shift motor functioning also as a clutch motor and being configured to switch a gear stage from one to another and to connect or disconnect the clutch. In a multistage transmission device according to PTL 2, power is transmitted from the shift motor to a shift spindle via reduction gear trains. The shift spindle is provided with a gear change mechanism and a clutch operation mechanism. In the multistage transmission device according to PTL 2, when the shift spindle is driven by the power from the shift motor, the gear change mechanism causes the shift drum to rotate and the clutch operation mechanism disconnects or connects a gear-shifting clutch at this time. According to PTL 2, the start operation of the vehicle is performed by a centrifugal clutch that is not the gear-shifting clutch.

US 2016/0288879 A1 discloses a motorcycle comprising a power unit, the power unit comprising an engine, a generator, a starting clutch provided on a crankshaft of the engine, and an automatic speed change apparatus. The automatic speed change apparatus includes a forward four-speed normally meshed transmission, a change clutch, an clutch operation mechanism, a gear change operation mechanism, and an actuator mechanism adapted to drive the clutch operation mechanism and the gear change mechanism.

JP S63 34358 A teaches a starter for an internal combustion engine, in which an idle shaft a reduction gear mechanism is set up between a bearing of a balancer shaft rotating synchronously with a crankshaft and a bearing of an outer case attached to a crankcase. With this constitution, the idle shaft is set up on an extension of the balancer shaft.

US 2017/350506 A1 discloses a straddled vehicle comprising: an engine including a crankcase,a crankcase cover located outward of the crankcase in a vehicle width direction, and a crankshaft rotatably supported by the crankcase; a multistage transmission device; and a driving wheel configured to rotate to cause the straddled vehicle to run upon reception of drive power outputted from the engine and transmitted via the multistage transmission device, wherein the multistage transmission device includes an input shaft rotatably supported by the crankcase, the input shaft being configured to receive drive power from the crankshaft, the input shaft having a plurality of driving gears, an output shaft rotatably supported by the crankcase, the output shaft having a plurality of driven gears engaged with their corresponding driving gears, the output shaft being configured to output drive power toward the driving wheel,a shift cam configured to rotate to change, among the plurality of driving gears and the plurality of driven gears, paired driving gear and driven gear that transmit the drive power between the input shaft and the output shaft, a shift motor including a body part and a shaft part that rotatably protrudes from the body part and that is configured to output operation power by rotation, the shift motor being configured to cause the shift cam to rotate by causing the shaft part to rotate for up-shifting or down-shifting such that a rotation direction of the shaft part for up-shifting and a rotation direction of the shaft part for down-shifting are opposite to each other,a starting clutch disposed on a drive power transmission path from the crankshaft to the output shaft, a clutch motor in addition to the shift motor and including a body part and a shaft part rotatably protruding from the body part and being configured to output operation power by rotation, the clutch motor being configured to output operation power for connecting or disconnecting the starting clutch, and an operation power transmission mechanism configured to transmit the operation power from the clutch motor to the starting clutch, the operation power transmission mechanism being disposed so as to be at least partially included in a space between the crankcase and the crankcase cover, wherein the crankcase has a support wall supporting at least the crankshaft.

### Citation List

### Patent Literature

PTL1: International Publication No. WO 2006/004008
PTL 2: Japanese Patent No. 6190410

### Summary of Invention

### Technical Problem

When traveling and/or making a turn with a straddled vehicle, a rider on the straddled vehicle controls the posture of the vehicle body by shifting his/her weight. In order that the posture of the straddled vehicle can be controlled by rider's weight shifting in an efficient manner, the size and weight of the straddled vehicle are preferably small. Therefore, for the straddled vehicle, a further size reduction of the multistage transmission device including the clutch motor is desired.

An object of the present invention is to provide a straddled vehicle with which the whole of a multistage transmission device including a clutch motor can be downsized.

### Solution to Problem

In order to manipulate the clutch, a relatively large load is required. Thus, the clutch actuator such as the clutch motor is likely to be large in size. On the other hand, considering the characteristic of the straddled vehicle that the posture of the vehicle is controlled by rider's weight shifting, reductions in the size and weight of the straddled vehicle is demanded. Thus, upsizing of the clutch actuator is not preferable.

According to the automatic transmission device of PTL 1, deceleration of the rotation outputted from the clutch motor and utilization of the biasing force of the coil spring are conducted inside the operation power transmission mechanism. This makes it possible to generate a torque required to manipulate the clutch while suppressing or reducing upsizing of the clutch motor. This, however, requires a relatively large operation power transmission mechanism, such as those described in PTL 1. In addition, the operation power transmission mechanism includes multiple power transmission elements (e.g., gears) that are used for deceleration and are arranged side by side. Thus, a relatively large space is required. Consequently, the clutch motor is disposed at a location separated away from the clutch shaft. Therefore, it is difficult to reduce the size of the whole of the automatic transmission unit. As described above, conventionally, it has been considered that the clutch motor needs to be disposed at a location separated away from the clutch shaft in order to dispose the operation power transmission mechanism for achieving an adequate reduction gear ratio.

According to the multistage transmission device of PTL 2, the shift motor performs an operation of the gear-shifting clutch only. Here, it is difficult for the shift motor to also perform an operation of the starting clutch. This is because the starting clutch needs to be controlled in a more minute manner than the gear-shifting clutch, and the motor needs to be controlled in consideration of heat and vibration effects on the clutch. Therefore, it is impossible to make the shift motor bear the function of performing the control for connecting or disconnecting the starting clutch for the purpose of downsizing the multistage transmission device. Thus, the control of the starting clutch needs to be performed by a dedicated motor.

Against the conventional design concepts as described above, the inventor of the present invention has arrived at an idea of disposing, in a space between the crankcase and the crankcase cover, the operation power transmission mechanism for transmitting power from the clutch motor, which is not the shift motor, to the starting clutch. By utilizing this space, it is possible to achieve an adequate space to install the operation power transmission mechanism, and also to reduce a distance between the clutch motor and the starting clutch. Thanks to the achievement of the adequate space to install the operation power transmission mechanism, it is possible to achieve a relatively long operation power transmission path and a reduction gear ratio. Consequently, it is possible to prevent or reduce upsizing of the clutch motor. In addition, thanks to the configuration in which the clutch motor is disposed near the starting clutch, it is possible to prevent or reduce the clutch motor from greatly protruding outwardly from the crankcase, thereby making it possible to prevent or reduce upsizing of the whole of the multistage transmission device. Furthermore, by performing the control of the starting clutch by the dedicated clutch motor, it is possible to perform the control of the starting clutch in a minute manner. Consequently, the whole of the multistage transmission device including the clutch motor can be downsized. The inventor has completed the present invention based on the above-described knowledge specific to the straddled vehicle. To be more specific, the present invention provides.

According to the invention a straddled vehicle includes:
an engine including
   a crankcase,
   a crankcase cover located outward of the crankcase in a vehicle width direction, and
   a crankshaft rotatably supported by the crankcase;
a multistage transmission device; and
a driving wheel configured to rotate to cause the straddled vehicle to run upon reception of drive power outputted from the engine and transmitted via the multistage transmission device, wherein
the multistage transmission device includes
   an input shaft rotatably supported by the crankcase, the input shaft being configured to receive drive power from the crankshaft, the input shaft having a plurality of driving gears,
   an output shaft rotatably supported by the crankcase, the output shaft having a plurality of driven gears engaged with their corresponding driving gears, the output shaft being configured to output drive power toward the driving wheel,
   a shift cam configured to rotate to change, among the plurality of driving gears and the plurality of driven gears, paired driving gear and driven gear that transmit the drive power between the input shaft and the output shaft,
   a shift motor including a body part and a shaft part that rotatably protrudes from the body part and that is configured to output operation power by rotation, the shift motor being configured to cause the shift cam to rotate by causing the shaft part to rotate for up-shifting or down-shifting such that a rotation direction of the shaft part for up-shifting and a rotation direction of the shaft part for down-shifting are opposite to each other,
   a starting clutch disposed on a drive power transmission path from the crankshaft to the output shaft,
   a clutch motor in addition to the shift motor and including a body part and a shaft part rotatably protruding from the body part and being configured to output operation power by rotation, the clutch motor being configured to output operation power for connecting or disconnecting the starting clutch, and
   an operation power transmission mechanism configured to transmit the operation power from the clutch motor to the starting clutch, the operation power transmission mechanism being disposed so as to be at least partially included in a space between the crankcase and the crankcase cover.

With the configuration described in (1), since the control of the starting clutch is performed by the dedicated clutch motor, the starting clutch can be controlled in a minute manner. The clutch motor is disposed such that the operation power transmission mechanism, which is configured to transmit the operation power from the clutch motor to the starting clutch, is at least partially included in the space between the crankcase and the crankcase cover. This space is a part of the surroundings of the crankshaft, and is located between the crankcase and the crankcase cover, for example. By utilizing this space, it is possible to achieve an adequate space to install the operation power transmission mechanism, and also to reduce a distance between the clutch motor and the starting clutch. Thus, it is possible to secure a relatively long operation power transmission path, thereby making it possible to secure a reduction gear ratio. Consequently, it is possible to prevent or reduce upsizing of the clutch motor. In addition, thanks to the configuration in which the clutch motor is disposed near the starting clutch, it is possible to prevent or reduce the clutch motor from greatly protruding outwardly from the crankcase, thereby making it possible to prevent or reduce upsizing of the whole of the multistage transmission device. Consequently, in the straddled vehicle, the whole of the multistage transmission device including the clutch motor can be further downsized.

In addition, according to the present invention
the crankcase has a support wall supporting at least the crankshaft, and
the body part of the clutch motor is supported at least by the support wall.

The support wall supporting at least the crankshaft is an essential member for the crankcase. Since the support wall supports the crankshaft, which is related to transmission of drive power, the support wall has a relatively high mechanical strength. Therefore, with the configuration described in (2), a support member to which the body part of the clutch motor is mounted can be omitted or simplified. In addition, the support wall is positioned relatively inward of the engine in the vehicle width direction. The "inward" herein refers to a direction oriented toward the center of the vehicle body. In particular, in single-cylinder engines, a support wall supporting a crankshaft is often disposed at an innermost location in a vehicle width direction. Thus, by mounting the clutch motor to the support wall, it is possible to prevent or reduce protrusion of the clutch motor in the vehicle width direction. Thanks to the prevention or reduction of the protrusion of the clutch motor in the vehicle width direction, the effects on the position of a footrest, the installation position of a drive chain, the weight balance of the vehicle, and the like are suppressed or reduced, too. Accordingly, it is possible to further downsize the multistage transmission device in a manner suitable for the straddled vehicle.

The configuration described above is based on a new design concept that is different from conventional ones. The reason will be explained below.

The clutch motor is a motor that operates for start, stop, and gear-shifting of the vehicle. In order to control a degree of disconnection or connection of the starting clutch, the clutch motor needs to rotate at an accurate speed and at an accurate angle. Since the clutch motor needs to operate even while the engine is running, the clutch motor is likely to be affected by vibrations and heat generated while the engine is running.

A conventional clutch motor has been installed in a mode in which the clutch motor is hardly affected by the vibrations and heat. More specifically, a conventional clutch motor is mounted to a crankcase cover attached to a crankcase via a gasket, and another conventional clutch motor is mounted to an actuator case independent of an engine. Thus, conventionally, persons skilled in the art have not conceived mounting of the clutch motor to the crankcase (the support wall for the crankshaft), which is directly subjected to the vibrations and heat.

However, as described above, the inventor of the present invention found that the configuration in which the operation power transmission mechanism for transmitting power from the clutch motor to the starting clutch is disposed in the space between the crankcase and the crankcase cover makes it possible to provide a vibration and heat reduction member at a location between the clutch motor and the crankcase even without upsizing the engine and the multistage transmission device including the clutch motor. Therefore, even if the clutch motor is mounted to the support wall, the clutch motor is hardly affected by the vibrations and heat. By mounting the clutch motor to the support wall, it is possible to further downsize the multistage transmission device, as described above.

According to an embodiment of the invention the straddled vehicle is configured such that
the crankcase has a support wall supporting at least the output shaft and the input shaft, and
the body part of the clutch motor is mounted to the support wall such that the body part of the clutch motor is supported at least by the support wall.

In the straddled vehicle including the multistage transmission device, the support wall supporting at least the output shaft and the input shaft is an essential member for the crankcase. Since the support wall supports the output shaft and the input shaft, each of which is related to transmission of drive power, the support wall has a relatively high mechanical strength. Therefore, a support member to which the body part of the clutch motor is mounted can be omitted or simplified. In addition, the support wall is positioned relatively inward of the engine in the vehicle width direction. In particular, in single-cylinder engines, the support wall supporting the output shaft and the input shaft is often disposed at an innermost location in the vehicle width direction. Thus, by mounting the clutch motor to the support wall, it is possible to prevent or reduce protrusion of the clutch motor in the vehicle width direction. Thanks to the prevention or reduction of the protrusion of the clutch motor in the vehicle width direction, the effects on the position of the footrest, the installation position of the drive chain, the weight balance of the vehicle, and the like are suppressed or reduced, too. Accordingly, it is possible to further downsize the multistage transmission device in a manner suitable for the straddled vehicle. The support wall supporting the output shaft and the input shaft may be identical to or different from the support wall supporting the crankshaft.

The configuration described above is based on a new design concept that differs from conventional ones. The reason will be explained below.

As described above, the clutch motor is likely to be affected by vibrations and heat generated while the engine is running. Thus, conventionally, persons skilled in the art have not conceived of mounting the clutch motor to the crankcase (the support wall for the input shaft and the output shaft), which is directly subjected to the vibrations and heat.

However, as described above, the inventor of the present invention found that the configuration in which the operation power transmission mechanism is disposed in the space between the crankcase and the crankcase cover makes it possible to provide a vibration and heat reduction member at a location between the clutch motor and the crankcase even without upsizing the engine and the multistage transmission device including the clutch motor. Therefore, even if the clutch motor is mounted to the support wall, the clutch motor is hardly affected by the vibrations and heat. By mounting the clutch motor to the support wall, it is possible to further downsize the multistage transmission device, as described above.

According to an embodiment of the invention the straddled vehicle is configured such that
the support wall has an inside surface facing a center of the straddled vehicle in the vehicle width direction, and
the body part of the clutch motor is mounted to the inside surface of the support wall such that the shaft part extends outwardly in the vehicle width direction from the body part.

With this configuration, protrusion of the clutch motor in the vehicle width direction is further prevented or reduced. Accordingly, it is possible to further downsize the multistage transmission device in a manner more suitable for the straddled vehicle.

According to an embodiment of the invention the straddled vehicle is configured such that
the crankcase is a left-right split type crankcase, the crankcase is mounted to the straddled vehicle such that a mating plane of the crankcase extends along a front-rear direction, and
the body part of the clutch motor is disposed to overlap a plane including the mating plane of the crankcase.

With this configuration, protrusion of the clutch motor in the vehicle width direction is further prevented or reduced. Accordingly, it is possible to further downsize the multistage transmission device in a manner more suitable for the straddled vehicle.

According to an embodiment of
the invention the straddled vehicle is configured such that
the engine has a displacement of 300 cc or less, and
the clutch motor is disposed above the crankshaft of the engine having a displacement of 300 cc or less and the output shaft when seen in the vehicle width direction.

According to the configuration described above, in the straddled vehicle including a relatively small engine having a displacement of 300 cc or less, the clutch motor is disposed such that the operation power transmission mechanism is at least partially located in the space between the crankcase and the crankcase cover. With this, it is possible to effectively utilize, as the installation space of the clutch motor, a space above the crankshaft of the relatively small engine and the output shaft. Thus, in the straddled vehicle including the relatively small engine, the whole of the multistage transmission device including the clutch motor can be disposed in a compact manner.

According to an embodiment of the invention the straddled vehicle is configured such that
the clutch motor is disposed such that the shaft part of the clutch motor is located between the crankshaft and the output shaft in the front-rear direction when seen in the vehicle width direction.

According to the configuration described above, the clutch motor is disposed such that the operation power transmission mechanism is at least partially located in the space between the crankcase and the crankcase cover and the shaft part of the clutch motor is located between the crankshaft and the output shaft when seen in the vehicle width direction. With this configuration, the clutch motor and the operation power transmission mechanism can be disposed in a compact manner.

According to an embodiment of the invention the straddled vehicle is configured such that
the operation power transmission mechanism is configured such that, in the space between the crankcase and the crankcase cover, a path for transmitting the operation power extends from the shaft part of the clutch motor toward the crankshaft and extends back toward the shaft part of the clutch motor.

With the configuration described above, as the path for transmitting the operation power, a relatively long path can be secured in a compact manner. Consequently, it is possible to prevent or reduce upsizing of the clutch motor. Consequently, the whole of the multistage transmission device including the clutch motor can be further downsized.

According to an embodiment of the invention the straddled vehicle further includes a clutch motor assisting mechanism disposed so as to be included in the space between the crankcase and the crankcase cover, the clutch motor assisting mechanism being configured to receive operation power transmitted from the operation power transmission mechanism, to hold the starting clutch in a connected state or a disconnected state, and to assist operation power for bringing the starting clutch into the disconnected state from the connected state, the operation power being applied by the clutch motor.

To the starting clutch, a biasing force is applied by the clutch spring in a direction for connecting the starting clutch. When bringing the starting clutch into the disconnected state from the connected state, the clutch motor should rotate against the biasing force of the clutch spring for starting.

With the configuration described above, the clutch motor assisting mechanism assists the rotational force of the clutch motor until the starting clutch transitions from the connected state to the disconnected state. Thus, with the configuration described above, it is possible to reduce the load given to the clutch motor at the time during the transition of the starting clutch from the connected state to the disconnected state. In addition, with the configuration described in (9), since the clutch motor assisting mechanism holds the starting clutch in the connected state or the disconnected state, it is possible to hold the starting clutch in the connected state or the disconnected state in a fixed manner while the clutch motor is not operating.

According to a further embodiment of the invention the straddled vehicle disclosed in paragraph [0035] is configured such that
the clutch motor assisting mechanism includes
a gear configured to receive the operation power transmitted from the operation power transmission mechanism and
a spring mechanism rotatably connected to the gear, the spring mechanism being configured to hold the starting clutch in the connected state or the disconnected state and to assist the operation power for bringing the starting clutch into the disconnected state from the connected state, the operation power being applied by the clutch motor.

With the configuration described above, the clutch motor assisting mechanism is constituted by the gear and the spring mechanism. Thus, the clutch motor assisting mechanism can be structured in a simple manner.

According to a further embodiment of the invention the straddled vehicle disclosed in paragraph [0035] is configured such that the spring mechanism is configured to give the gear a rotational force for bringing the starting clutch into the disconnected state from the connected state.

Thus, with the configuration described above, it is possible to reduce the load given to the clutch motor during the transition of the starting clutch from the connected state to the disconnected state.

According to a further embodiment of the invention the straddled vehicle disclosed in paragraph [0040] is configured such that the spring mechanism is configured to receive a biasing force given by a coil spring.

With the configuration described above, it is possible to reduce the load on the clutch motor by the force of the coil spring.

The straddled vehicle described in paragraph [0040] may be configured such that
the spring mechanism is configured to receive a biasing force given by a permanent magnet.

With the configuration described above, it is possible to reduce the load on the clutch motor, thanks to a repelling force of the permanent magnet.

The straddled vehicle refers to a vehicle including a saddle on which a rider can sit. The straddled vehicle is configured to travel and/or make a turn by the rider's weight shifting. The straddled vehicle includes a handle bar that can be held by the rider. When traveling and/or making a turn with the straddled vehicle, the rider controls the vehicle's posture by shifting his/her weight while holding the handle bar with his/her hands. The straddled vehicle includes a driving wheel. Examples of the type of straddled vehicle hold no limitation and can encompass a motorcycle (a two-wheeled motorcycle and a three-wheeled motorcycle) and an all-terrain vehicle (ATV). The straddled vehicle according to the present invention is preferably a straddled vehicle configured to make a turn in a leaning posture. The straddled vehicle may employ an under-bone type frame structure, for example. The straddled vehicle includes a swing arm rotatably supporting the driving wheel and being swingably mounted to the vehicle body, for example. In this case, the driving wheel is a rear wheel, for example. Alternatively, a front wheel may be a driving wheel. Further alternatively, a front wheel and a rear wheel may be driving wheels. In a case of a three-wheeled motorcycle including two front wheels, the two front wheels may be driving wheels or a single rear wheel may be a driving wheel. In a case of a three-wheeled motor vehicle including two rear wheels, a single front wheel may be a driving wheel or the two rear wheels may be driving wheels.

One example of the engine is a four-stroke engine. One example of the engine can be a petrol engine. Alternatively, another example of the engine may be a diesel engine. One example of the engine can be a water-cooled engine. Alternatively, the engine may be an air-cooled engine. The engine can be an intake pipe injection type engine, for example. Alternatively, the engine may be a direct injection type engine. The engine can be a single-cylinder engine, for example. Alternatively, the engine may be a multi-cylinder engine. The engine is preferably a single-cylinder engine or a double-cylinder engine. The engine is more preferably a single-cylinder engine, a parallel double cylinder engine, or a V-shaped double cylinder engine. The engine is far more preferably a single-cylinder engine or a parallel double cylinder engine. The multi-cylinder engine may be an equal-interval explosion engine or an unequal-interval explosion engine. The same applies to the double-cylinder engine. The single-cylinder engine or the double-cylinder engine includes a relatively short crankshaft, and therefore can be disposed at a relatively low position while preventing interference with a bank line. By positioning the input shaft, to which the starting clutch is mounted, to a location above the output shaft and the crankshaft in this state, it is possible to prevent or reduce contact between the starting clutch and oil while preventing interference between the starting clutch and the bank line. Thus, the engine is preferably a single-cylinder or double-cylinder engine, and the input shaft, to which the starting clutch is mounted, is preferably disposed above the output shaft and the crankshaft. There is no particular limitation on the displacement of the engine. However, the displacement of the engine is preferably 300 cc or less, for example. In a straddled vehicle including a relatively small engine having a displacement of 300 cc or less, a space between an engine and a driving wheel in a front-rear direction can be effectively utilized as an installation space of a shift motor, so that the whole of a multistage transmission device including a shift motor can be disposed in a compact manner.

The crankcase is configured to rotatably support the crankshaft. One example of the crankcase has two support walls supporting the crankshaft. The two support walls are disposed such that the two support walls are spaced from each other in the axial direction of the crankshaft. The axial direction of the crankshaft is parallel with the vehicle width direction, for example. The crankcase has two support walls supporting the input shaft and the output shaft, for example. The two support walls supporting the crankshaft may be identical in thickness to the two support walls supporting the input shaft and the output shaft, or the two support walls supporting the crankshaft may be different in thickness from the two support walls supporting the input shaft and the output shaft. The two support walls supporting the crankshaft may be positioned at different locations from the two support walls supporting the input shaft and the output shaft in the axial direction of the crankshaft. Alternatively, the two support walls supporting the crankshaft may be positioned at identical locations to the two support walls supporting the input shaft and the output shaft in the axial direction of the crankshaft. The crankcase is designed to cover an area around rotating parts of the crankshaft so as to be spaced from the crankshaft in the radial direction of the crankshaft, for example. The crankcase may be integrated with a cylinder block or may be separated from the cylinder block.

The crankcase cover is disposed outward in the vehicle width direction of the crankcase. For example, the crankcase cover is designed to cover the crankcase so as to be spaced from the crankcase in the vehicle width direction.

The multistage transmission device has multiple gear stages. In addition, the multistage transmission device may have a neutral position. There is no particular limitation on the number of gear stages. For example, the multistage transmission device may have four to six gear stages in addition to the neutral position. The multistage transmission device may further have a parking position. The multistage transmission device may further have a reverse position. The multistage transmission device is a transmission device of bottom-neutral type, for example. Alternatively, the multistage transmission device may be a transmission device of half-neutral type (bottomlow type). The bottom-neutral type refers to a shift pattern in which a neutral position is arranged below the first speed. The half-neutral type refers to a shift pattern in which the neutral position is arranged between the first speed and the second speed. The multistage transmission device is a return-type transmission device, for example. Alternatively, the multistage transmission device may be a rotary-type transmission device.

The input shaft is parallel with or substantially parallel with the crankshaft. The input shaft has a gear engageable with the gear provided to the crankshaft, for example. The input shaft is configured to receive drive power inputted from the crankshaft via the gear. The input shaft is coaxial to the crankshaft. The input shaft has driving gears associated with their corresponding gear stages. The driving gears are arranged side by side in an axial direction of the input shaft, for example.

The output shaft is parallel with or substantially parallel with the input shaft. The output shaft has driven gears associated with their corresponding gear stages. The driven gears are engaged with their corresponding driving gears. For example, the output shaft is provided with a sprocket, around which a drive chain is wound. The output shaft transmits drive power to the driving wheel via the drive chain. The mode for transmitting drive power from the output shaft to the driving wheel is not limited to this example.

The shift cam is rotatably supported by the crankcase. The shift cam has a cam part extending in a circumferential direction. For example, the cam part may be a groove or a protrusion. To the cam part, a member (e.g., a shift fork, which will be described later) configured to be movable in the axial direction is engaged. The cam part is formed to cause the member to move in the axial direction as the shift cam rotates. As a result of rotation of the shift cam, the shift cam causes the member to move in the axial direction. This changes, among the driving gears and the driven gears, paired driving gear and driven gear that transmit drive power between the input shaft and the output shaft. For example, the paired driving gear and driven gear is changed by dog engagement, which will be described later. Alternatively, the paired driving gear and driven gear may be changed by means of a ratchet.

The shift motor includes the body part and the shaft part. The body part is designed to accommodate a stator and a rotor therein. The shaft part rotatably protrudes from the body part. The shaft part is configured to output operation power by rotation. There is no particular limitation on the type of shift motor as a conventionally known motor can be adopted. The multistage transmission device includes the clutch motor in addition to the shift motor. The clutch motor is a motor for connecting or disconnecting the starting clutch. The shift motor does not also function as the clutch motor. The operation power from the shift motor is used to cause the shift cam to rotate, but is not used to connect or disconnect the starting clutch.

The starting clutch is configured to be connected or disconnected by the clutch motor. The starting clutch may also function as the gear-shifting clutch used to a gear-shifting operation. That is, the starting clutch may be configured not only to start the vehicle by starting connecting the clutch but also to perform gear shifting in a state where the clutch is disconnected. The starting clutch is installed on the drive power transmission path from the crankshaft to the output shaft. The drive power transmission path is a path constituted by the crankshaft, the input shaft, the driving gears, the driven gears, and the output shaft in this order. For example, the starting clutch is mounted to any one of the crankshaft, the input shaft, or the output shaft. For another example, the starting clutch is mounted to the crankshaft or the input shaft. For a further example, the starting clutch is mounted to the input shaft. The clutch motor is configured to transmit operation power to the starting clutch via the operation power transmission mechanism. The connection or disconnection of the starting clutch by means of the clutch motor may be conducted in response to the rider's manipulation of the starting clutch, or may be conducted not in response to the rider's manipulation of the starting clutch. Even with a configuration in which the connection or disconnection of the starting clutch is conducted in response to the rider's manipulation of the starting clutch, the connection or disconnection of the starting clutch is not executed by a manipulation force applied by the rider, but is executed by the clutch motor (clutch-by-wire).

The clutch motor includes the body part and the shaft part. The body part is designed to accommodate a stator and a rotor therein. The shaft part rotatably protrudes from the body part. The shaft part is configured to output operation power by rotation. There is no particular limitation on the clutch motor. A conventionally known motor can alternatively be adopted. The multistage transmission device includes the shift motor in addition to the clutch motor. The shift motor is a motor for causing the shift cam to rotate for performing a gear-shifting operation. The clutch motor does not also function as the shift motor. The operation power from the clutch motor is not used to cause the shift cam to rotate, but is used to connect or disconnect the starting clutch.

The operation power transmission mechanism transmits operation power from the clutch motor to the starting clutch so that disconnection or connection of the starting clutch is executed by the operation power from the clutch motor, for example. The operation power transmission mechanism includes a converting mechanism configured to convert a rotational motion caused by the operation power outputted from the clutch motor into a reciprocating motion for connecting or disconnecting the starting clutch, for example. The converting mechanism is preferably at least partially included in the space between the crankcase and the crankcase cover. This can prevent or reduce upsizing of the multistage transmission device. In addition, the operation power transmission mechanism includes a reduction gear mechanism for improving the torque of the operation power outputted from the clutch motor, for example. The reduction gear mechanism is preferably at least partially included in the space between the crankcase and the crankcase cover. This can prevent or reduce upsizing of the multistage transmission device.

The clutch motor assisting mechanism assists the operation power for bringing the starting clutch into the disconnected state from the connected state, which operation power is applied by the clutch motor, for example. The clutch motor assisting mechanism holds the starting clutch in the connected state or the disconnected state, for example. The clutch motor assisting mechanism is preferably at least partially included in the space between the crankcase and the crankcase cover. This can prevent or reduce upsizing of the multistage transmission device.

The terminology used herein is for defining particular embodiments only, and is not intended to limit the invention. As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both direct and indirect attachment, connection, and coupling. In addition, the terms "connected" and "coupled" can mean not only physical or mechanical connection or coupling, but also direct or indirect electrical connection or coupling. Unless otherwise defined, all terms (including technical and scientific terms) used herein have the same meaning as commonly understood by one of ordinary skilled in the art to which the present invention belongs. It will be further understood that terms, such as those defined in commonly used dictionaries, should be interpreted as having a meaning that is consistent with their meaning in the context of the present disclosure and relevant art, and should not be interpreted in an idealized or overly formal sense unless expressly so defined herein. It will be understood that the description of the present invention discloses a number of techniques and steps. In the description given below, for the purposes of explanation, numerous specific details are set forth in order to provide a thorough understanding of the present invention. It will be apparent, however, that those skilled in the art may practice the present invention without these specific details. The present disclosure is to be considered as an exemplification of the present invention, and is not intended to limit the present invention to the specific embodiments illustrated by drawings or descriptions below.

### Advantageous Effects of Invention

According to the present invention, it is possible to provide a straddled vehicle with which the whole of a multistage transmission device including a clutch motor can be downsized.

### Brief Description of Drawings

[FIG. 1] A drawing for explaining an outline of a motorcycle according to an embodiment.
[FIG. 2] A left side view schematically illustrating the motorcycle according to the embodiment.
[FIG. 3] A left side view schematically illustrating an engine and a multistage transmission device included in the motorcycle shown in FIG. 2.
[FIG. 4] A partial enlarged view of a part of the view of FIG. 3.
[FIG. 5] A partial enlarged view of another part of the view of FIG. 3.
[FIG. 6] A side view schematically illustrating a crankcase cover covering a left end of a crankshaft.
[FIG. 7] A right side view schematically illustrating the engine and the multistage transmission device included in the motorcycle shown in FIG. 2.
[FIG. 8] A partial enlarged view of a part of the view of FIG. 7.
[FIG. 9] A vertical cross-sectional view of the multistage transmission device shown in FIG. 7.
[FIG. 10] A cross-sectional developed view taken along line I-I in FIG. 9.
[FIG. 11] A cross-sectional developed view taken along line II-II in FIG. 9.
[FIG. 12] A cross-sectional developed view taken along line III-III in FIGs. 5 and 6.
[FIG. 13] A cross-sectional developed view taken along line III-III in FIGs. 5 and 6.
[FIG. 14] A cross-sectional developed view taken along line III-III in FIGs. 5 and 6.
[FIG. 15] A cross-sectional developed view taken along line IV-IV in FIGs. 3 and 4.
[FIG. 16] A cross-sectional developed view taken along line V-V in FIGs. 3, 4, and 5.
[FIG. 17] A partial enlarged view of another part of the view of FIG. 3.
[FIG. 18] A partial enlarged view of another part of the view of FIG. 3.
[FIG. 19] A partial enlarged view of another part of the view of FIG. 3.

### Description of Embodiments

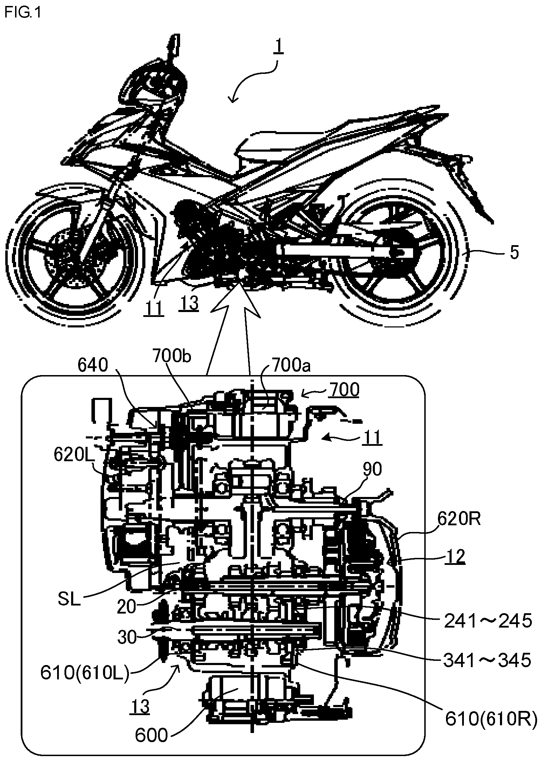

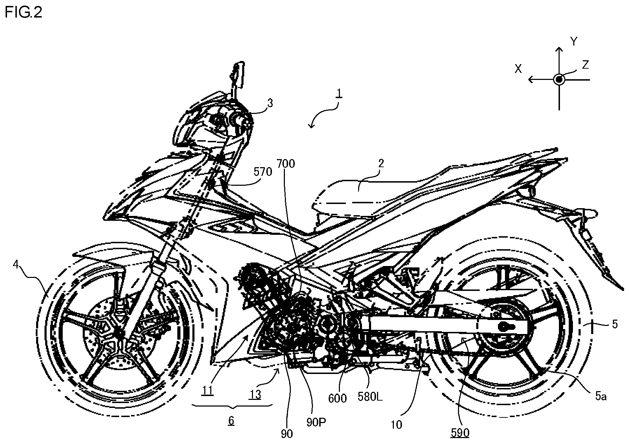

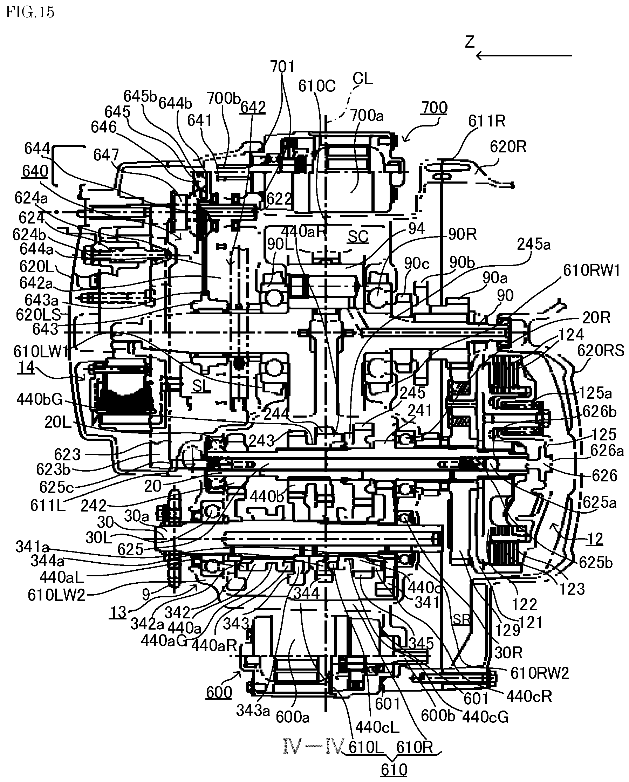

Firstly, with reference to FIG. 1, the following will describe an outline of a motorcycle according to an embodiment. FIG. 1 is a drawing for explaining an outline of the motorcycle. An upper part of FIG. 1 corresponds to FIG. 2. A lower right part of FIG. 1 corresponds to FIG. 15.

### [Overall Structure]

A motorcycle 1 includes an engine 11, a multistage transmission device 13, and a rear wheel 5 that is a driving wheel. The engine 11 includes a crankcase 610, crankcase covers 620L and 620R disposed outward of the crankcase 610 in a vehicle width direction, and a crankshaft 90 rotatably supported by the crankcase 610. Upon reception of drive power outputted from the engine 11 and transmitted via a multistage transmission device 13, the rear wheel 5 rotates to cause the motorcycle 1 to run.

The multistage transmission device 13 includes an input shaft 20 and an output shaft 30. The input shaft 20 is rotatably supported by the crankcase 610, is configured to receive the drive power from the crankshaft 90, and has a plurality of driving gears 241 to 245. The output shaft 30 is rotatably supported by the crankcase 610, has a plurality of driven gears 341 to 345 engaged with their corresponding driving gears 241 to 245, and is configured to output the drive power toward the rear wheel 5.

The multistage transmission device 13 includes a starting clutch 12, a clutch motor 700, and an operation power transmission mechanism 640. The starting clutch 12 is installed on a drive power transmission path from the crankshaft 90 to the output shaft 30. In the present embodiment, the starting clutch 12 is used for starting the vehicle. Not only this, the starting clutch 12 also functions as a gear-shifting clutch for enabling gear-shifting by giving a disconnected state. In the present embodiment, the starting clutch 12 will be hereinafter referred to as a clutch 12. The drive power transmission path is a path constituted by the crankshaft 90, the input shaft 20, the driving gears 241 to 245, the driven gears 341 to 345, and the output shaft 30 in this order. The clutch 12 is mounted to the input shaft 20. The clutch motor 700 includes a body part 700a and a shaft part 700b. The clutch motor 700 outputs operation power for connecting or disconnecting the clutch 12. The shaft part 700b rotatably protrudes from the body part 700a, and is configured to output operation power by rotation. The operation power transmission mechanism 640 is configured to transmit the operation power from the clutch motor 700 to the clutch 12. The operation power transmission mechanism 640 is at least partially included in a space SL between the crankcase 610 and the crankcase cover 620L.

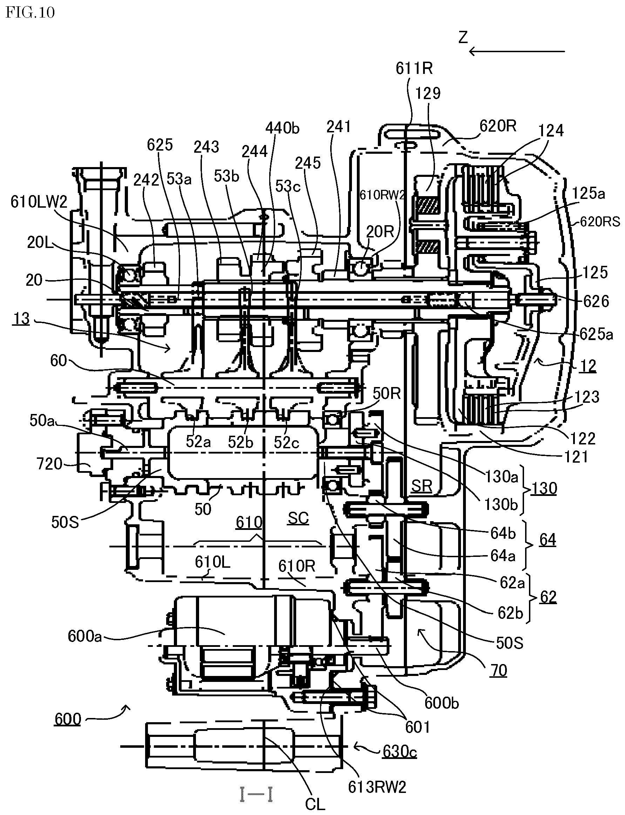

The multistage transmission device 13 includes a shift cam 50 and a shift motor 600. The shift cam 50 is rotatably supported by the crankcase 610 such that a shaft 50S is located in front of the output shaft 30 when seen in the vehicle width direction. The shift cam 50 has cam grooves 52a to 52c (see FIG. 10) extending in a circumferential direction. The cam grooves 52a to 52c are one example of the cam part. The shift cam 50 rotates to change, among the driving gears 241 to 245 and the driven gears 341 to 345, paired driving gear and driven gear that transmit drive power between the input shaft 20 and the output shaft 30.

The shift motor 600 includes a body part 600a and a shaft part 600b. The shaft part 600b rotatably protrudes from the body part 600a, and is configured to output operation power by rotation. The shift motor 600 is configured to cause the shift cam 50 to rotate by causing the shaft part 600b to rotate for up-shifting or down-shifting such that a rotation direction for up-shifting and a rotation direction for down-shifting are opposite to each other. The shift motor 600 is disposed in a manner satisfying all of (A) to (D) below. (A) The shaft part 600b is parallel with or substantially in parallel with the input shaft 20, the output shaft 30, and the shaft 50S of the shift cam 50. (B) The body part 600a is at least partially disposed inward of outside surfaces 620LS and 620RS of the crankcase covers 620L and 620R in the vehicle width direction. (C) When seen in the vehicle width direction, the shaft part 600b is located in the rear of the output shaft 30 such that the output shaft 30 is located between the shaft part 600b and the shaft 50S of the shift cam 50 in a front-rear direction. (D) The shift motor 600 is mounted to the inside surface 613RW2 of the crankcase 610.

With reference to the drawings, details of the motorcycle 1 according to the embodiment will be described below. The X direction corresponds to a front-rear direction of the motorcycle 1. The Y direction corresponds to a top-bottom direction of the motorcycle 1. The Z direction corresponds to the vehicle width direction of the motorcycle 1. In FIG. 2, the Z direction coincides with the direction of coming out and going into the drawing plane of FIG. 2. FIG. 2 is a side view illustrating the whole of the motorcycle 1. FIG. 2 shows the engine 11 and the multistage transmission device 13 of the motorcycle 1 as well as internal structures thereof in order to indicate the positions of the engine 11, the multistage transmission device 13, and the internal structures thereof.

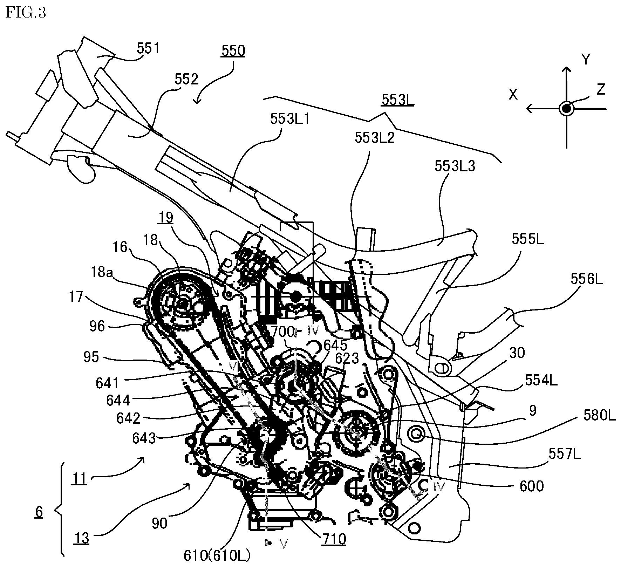

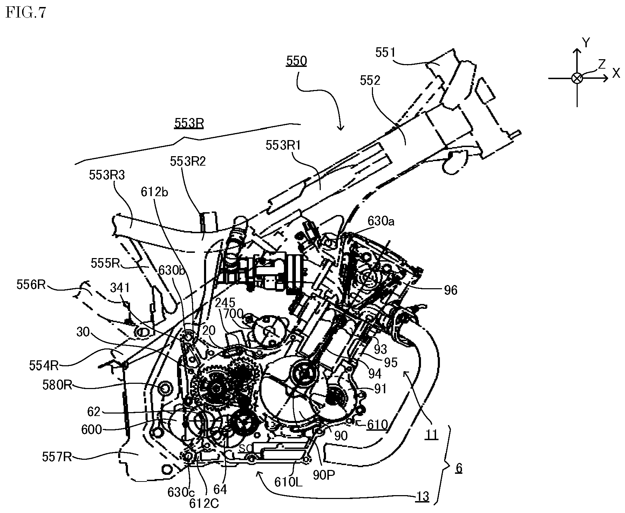

The motorcycle 1 is one example of the straddled vehicle. The motorcycle 1 is a motorcycle of under-bone type. The motorcycle 1 employs an under-bone type frame structure. As shown in FIGs. 3 and 7, the motorcycle 1 includes a vehicle body frame 550. The vehicle body frame 550 includes a head pipe 551, a main pipe frame 552, rear pipe frames 553L and 553R, lower pipe frames 554L and 554R, reinforcement members 555L, 555R, 556L, and 556R, and brackets 557L and 557R.

The head pipe 551 rotatably supports a front fork 570 (see FIG. 2). The main pipe frame 552 extends diagonally toward a lower rear side from the head pipe 551. The rear pipe frames 553L and 553R, which constitutes a pair, are respectively disposed on the left and right sides. As shown in FIGs. 3 and 7, the rear pipe frames 553L and 553R are respectively constituted by portions 553L1 and 553R1 extending from the rear end or its vicinity of the main pipe frame 552 diagonally toward a lower rear side, curved portions 553L2 and 553R2 curving from the rear ends of the portions 553L1 and 553R1 diagonally toward an upper rear side, and portions 553L3 and 553R3 extending from the rear ends of the curved portions 553L2 and 553R2 diagonally toward an upper rear side when seen from a lateral side of the vehicle. Although not shown in the drawings, in a plan view of the vehicle, the rear pipe frames 553L and 553R have portions forming so as to gradually separate away from the rear end or its vicinity of the main pipe frame 552 from each other in the vehicle width direction and then to extend in parallel with each other.

The lower pipe frames 554L and 554R, which constitute a pair, are respectively disposed on the left and right sides. The lower pipe frames 554L and 554R extend from the rear ends or their vicinities of the portions 553L1 and 553R1 diagonally toward the lower rear side. The reinforcement members 555L and 555R, which constitute a pair, are respectively disposed on the left and right sides. The reinforcement members 555L and 555R are pipe-shaped members connected to the lower pipe frames 554L and 554R and to the portions 553L3 and 553R3. The reinforcement members 556L and 556R, which constitute a pair, are also respectively disposed on the left and right sides. The reinforcement members 556L and 556R are pipe-shaped members connected to the lower pipe frames 554L and 554R and to the portions 553L3 and 553R3. Portions via which the reinforcement members 556L and 556R are connected to the lower pipe frames 554L and 554R are located below portions via which the reinforcement members 555L and 555R are connected to the lower pipe frames 554L and 554R. Portions via which the reinforcement members 556L and 556R are connected to the portions 553L3 and 553R3 are located in the rear of portions via which the reinforcement members 555L and 555R are connected to the portions 553L3 and 553R3. The brackets 557L and 557R, which constitute a pair, are respectively disposed on the left and right sides. The brackets 557L and 557R extend downward from the rear ends or their vicinities of the lower pipe frames 554L and 554R.

The brackets 557L and 557R support left and right paired swing arms 590 (see FIG. 2) such that the swing arms 590 are rotatable about pivot portions 580L (see FIGs. 2 and 3) and 580R (see FIG. 7). The swing arms 590 are swingably suspended by the vehicle body frame 550 (see FIGs. 3 and 7) via a rear suspension (not shown).

The motorcycle 1 includes a seat 2, a handle 3, a front wheel 4, the rear wheel 5 that is the driving wheel, and an engine unit 6. There is no particular limitation on the driving wheel. Alternatively, the front wheel 4 may be a driving wheel, or the front wheel 4 and the rear wheel 5 may be driving wheels. The engine unit 6 includes the engine 11 and the multistage transmission device 13. The multistage transmission device 13 includes the shift motor 600 and the clutch motor 700. When seen in the vehicle width direction (Z direction), the shift motor 600 and the clutch motor 700 are located in the rear of a rotational axis line 90P of the crankshaft 90 and in front of the rear wheel 5. The shift motor 600 and the clutch motor 700 operate at the time of gear shifting of the motorcycle 1 (i.e., at the time of gear-shifting operation of the multistage transmission device 13). The shift motor 600 and the clutch motor 700 operate under control of an electronic control unit (ECU) (not shown) of the motorcycle 1, for example. The gear-shift timing of the motorcycle 1 may be determined by rider's manipulating a gear-shifting operation piece provided to the motorcycle 1, for example.

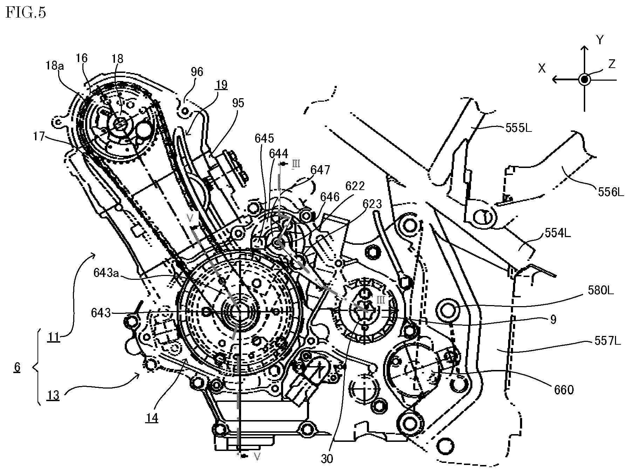

Next, with reference to FIGs. 3 to 16, the following will describe the engine 11 and the multistage transmission device 13 according to the present embodiment. As shown in FIGs. 2 to 5, 7, and 8, the engine unit 6 includes the engine 11 and the multistage transmission device 13. In the engine unit 6, drive power generated by the engine unit 11 is transmitted from the crankshaft 90 to the output shaft 30 (e.g., see FIG. 3) of the multistage transmission device 13. The drive power having reached the output shaft 30 is transmitted to the rear wheel 5 (see FIG. 2) via a drive sprocket 9 (e.g., see FIG. 3), the drive chain 10 (see FIG. 2), and a rear-wheel driving sprocket 5a (see FIG. 2). Consequently, the rear wheel 5 is driven, so that the motorcycle 1 runs.

### [Engine]

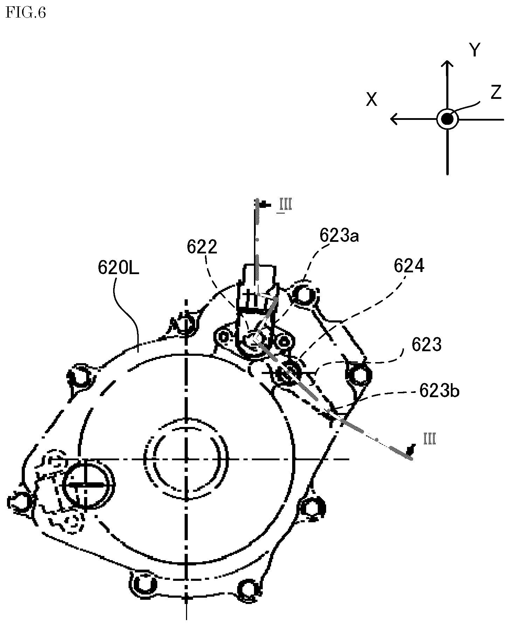

The engine 11 is a single-cylinder engine. The engine is a four-stroke engine. The engine 11 is a water-cooled engine. The engine is a petrol engine. The engine 11 has a displacement of 150 cc, for example. As shown in FIGs. 3 and 7, the engine 11 includes a cylinder head 96, a cylinder body 95, and the crankcase 610. The crankcase 610 is of left-right split type (see FIGs. 10 and 15). As shown in FIG. 15, the crankcase 610 is constituted by a case member 610L, which corresponds to a left half, and a case member 610R, which corresponds to a right half, coupled to each other in the vehicle width direction (Z direction). In FIG. 15, a mating plane 610C between the case members 610L and 610R overlaps a center line CL of the engine 11 in the vehicle width direction. In the vehicle width direction, the crankcase cover 620L is disposed on an outer left side of the crankcase 610 (i.e., outward of the case member 610L) (see FIG. 6). A mating plane 611L between the crankcase 610 and the crankcase cover 620L is located on the left of the mating plane 610C. In the vehicle width direction, the crankcase cover 620R is disposed on an outer right side of the crankcase 610 (i.e., outward of the case member 610R). A mating plane 611R between the crankcase 610 and the crankcase cover 620R is located on the right of the mating plane 610C.

As shown in FIG. 7, the engine 11 is tilted forward such that the cylinder head 96 is positioned in front of and above the cylinder body 95. In the cylinder body 95, a piston 93 is provided in such a manner that the piston 93 can move reciprocatingly between a lower rear side and an upper front side. The piston 93 is connected to a connecting rod 94. The connecting rod 94 is connected to the crankshaft 90. As shown in FIG. 15, the crankshaft 90 is rotatably disposed in a space SC in the crankcase 610 so as to be in parallel with the vehicle width direction (Z direction). The crankshaft 90 is rotatably supported by support walls 610LW1 and 610RW1 of the crankcase 610 via bearings 90L and 90R. The support wall 610LW1 is a portion of the crankcase 610 (case member 610L), the portion being perpendicular to the crankshaft 90. The support wall 610RW1 is a portion of the crankcase 610 (case member 610R), the portion being perpendicular to the crankshaft 90. While the engine 11 is running, the piston 93 moves reciprocatingly in the cylinder body 95, thereby causing the crankshaft 90 to rotate.

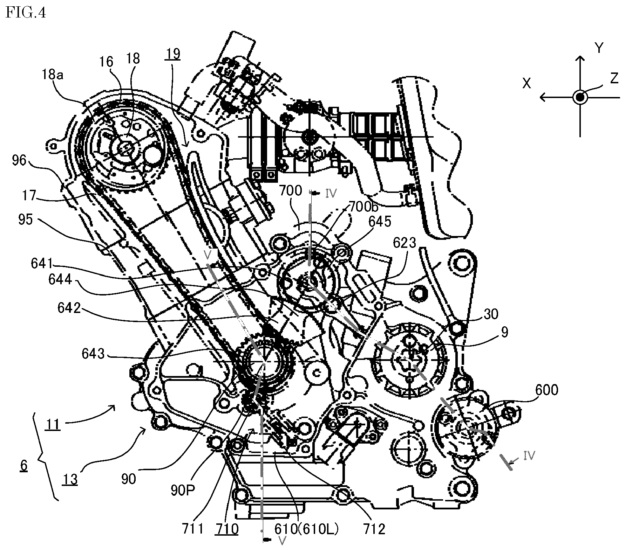

In the cylinder head 96, a cam shaft 18 is rotatably provided (see FIGs. 3 and 4, for example). Acam chain 16 is wound around a cam gear 18a provided to the cam shaft 18 and the crankshaft 90. A cam chain guide 17 and a chain tensioner 19 are provided in the cylinder body 95, the cylinder head 96, and the crankcase 610. The cam chain guide 17 is in contact with a tension side of the cam chain 16. The chain tensioner 19 is in contact with a slack side of the cam chain 16.

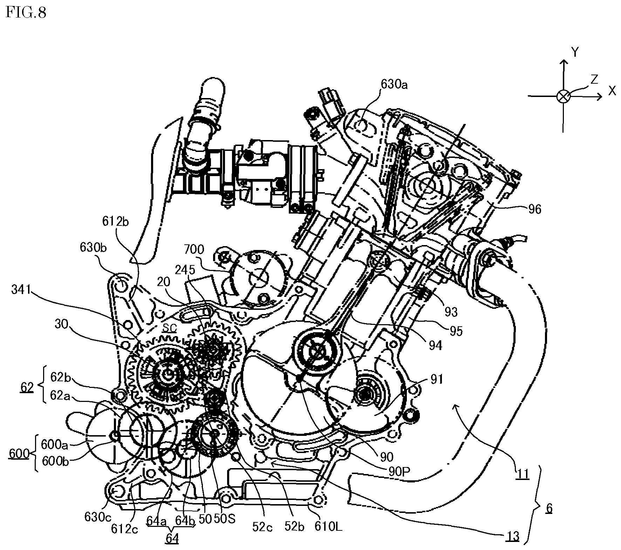

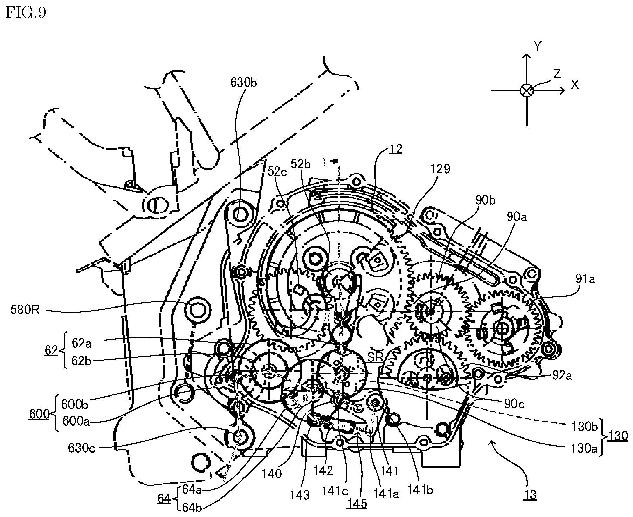

To a right portion of the crankshaft 90 shown in FIG. 15, gears 90a, 90b, and 90c are mounted coaxially to the crankshaft 90 and rotatably together with the crankshaft 90. The gear 90a is engaged with a clutch driving gear 129. The clutch driving gear 129 is mounted to the input shaft 20 such that the clutch driving gear 129 is coaxial to the input shaft 20 and rotatable relative to the input shaft 20 (see FIGs. 9 and 15). The gear 90b is engaged with a counter weight driving gear 91a (see FIG. 9). The counter weight driving gear 91a is provided coaxially to a counter weight 91 (see FIGs. 7 and 8) and rotatably together with the counter weight 91. The gear 90c is engaged with a pump driving gear 92a (see FIG. 9). In conjunction with rotation of the pump driving gear 92a, a pump (not shown) provided in the crankcase 610 operates. To a left end of the crankshaft 90 shown in FIG. 15, a starting generator 14 is provided.

### [Clutch]

To a right end of the input shaft 20 shown in FIGs. 10 and 15, the clutch 12 is mounted. The clutch 12 is a multi-plate friction clutch. The clutch 12 includes a clutch housing 121, a clutch boss 122, a plurality of friction plates 123, a plurality of clutch plates 124, and a pressure plate 125. The clutch 12 includes the clutch driving gear 129. In a state where the clutch is connected, the clutch driving gear 129 transmits, to the input shaft 20, drive power supplied from the crankshaft 90. The clutch housing 121 is configured to rotate together with the clutch driving gear 129. Accordingly, the clutch housing 121 rotates together with the crankshaft 90.

The clutch housing 121 is shaped in a bottomed cylinder. The clutch housing 121 is provided coaxially to the input shaft 20 and rotatably relative to the input shaft 20. The clutch housing 121 has an inner peripheral surface provided with the plurality of friction plates 123 provided in a standing manner to extend toward a radially inner side of the clutch housing 121. The plurality of friction plates 123 are arranged at intervals in an axial direction of the input shaft 20.

The clutch boss 122 has a tubular shape. The clutch boss 122 is disposed at a location inward of the clutch housing 121 in a radial direction of the input shaft 20. The clutch boss 122 rotates together with the input shaft 20. The clutch boss 122 has an outer peripheral surface provided with the plurality of clutch plates 124 provided in a standing manner to extend toward a radially outer side of the clutch boss 122. The plurality of clutch plates 124 are arranged at intervals in the axial direction of the input shaft 20. Each of the friction plates 123 and the clutch plates 124 are arranged alternately in the axial direction of the input shaft 20.

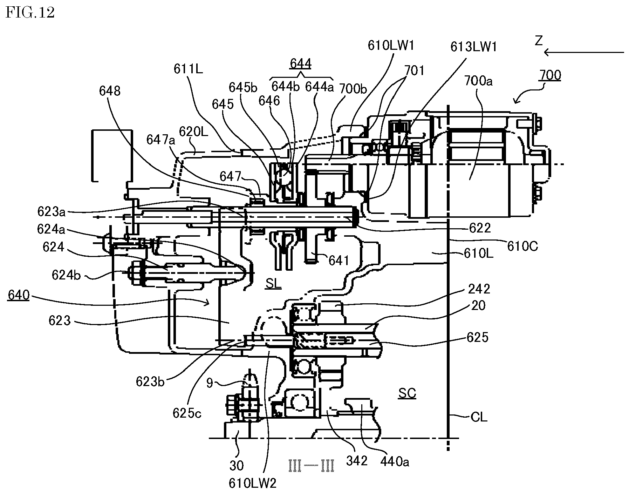

The pressure plate 125 is disposed such that it is spaced from the clutch boss 122 in the axial direction of the input shaft 20. The pressure plate 125 is biased toward the clutch boss 122 (in the left direction in FIGs. 10 and 15) by a clutch spring 125a. When the pressure plate 125 causes the friction plates 123 and the clutch plates 124 to press each other upon reception of the biasing force of the clutch spring 125a, the clutch 12 is connected. Meanwhile, when the pressure plate 125 causes the friction plates 123 and the clutch plates 124 to separate from each other against the biasing force of the clutch spring 125a, the clutch 12 is disconnected. The operation of the pressure plate 125 is controlled by the operation power outputted from the clutch motor 700 and transmitted via the operation power transmission mechanism 640 (see FIGs. 12 and 15).

### [Clutch Motor]

The clutch motor 700 includes the body part 700a and the shaft part 700b (see FIGs. 12 and 15, for example). The body part 700a includes a stator and a rotor (not shown). For example, in the clutch motor 700, either one of the stator and the rotor includes a permanent magnet (not shown). The shaft part 700b rotatably protrudes from the body part 700a. The shaft part 700b is configured to output operation power by rotation. The operation power from the clutch motor 700 is used to connect or disconnect the clutch 12. The clutch motor 700 is configured such that the shaft part 700b rotates in such a manner that a rotation direction of the shaft part 700b for connection of the clutch 12 and a rotation direction of the shaft part 700b for disconnection of the clutch 12 are opposite to each other. The clutch motor 700 is supported by the crankcase 610 (case member 610L) such that the shaft part 700b is located in the space SL between the crankcase 610 (case member 610L) and the crankcase cover 620L. The shaft part 700b is in parallel with the crankshaft 90. The clutch motor 700 is disposed such that the body part 700a overlaps a plane including the mating plane 610C of the crankcase 610. The plane overlaps the center line CL. As shown in FIGs. 7 and 8, the clutch motor 700 is located above both the input shaft 20 and the output shaft 30 in the top-bottom direction (Y direction). When seen in the vehicle width direction (Z direction), the clutch motor 700 is disposed such that the shaft part 700b is located between the rotational axis line 90P of the crankshaft 90 and the output shaft 30 in the front-rear direction (X direction) (see FIG. 4). The clutch motor 700 is disposed so as to be at least partially identical in height to the cylinder body 95. The clutch motor 700 is disposed so as to be at least partially overlap the crankshaft 90.

### [Operation Power Transmission Mechanism]

As shown in FIGs. 12 and 15, the operation power transmission mechanism 640 is configured to transmit, to the clutch 12, the operation power outputted from the clutch motor 700. The operation power transmission mechanism 640 includes a support shaft 622, a gear 641, a partial circumferential gear 642, a collar 643, a first relative rotation part 644, a second relative rotation part 645, a ball 646, a collar 647, a seesaw part 623, a support pin 624, a push rod 625, a ball 625a, and a connection member 626. The operation power transmission mechanism 640 has a part (i.e., the support shaft 622, the gear 641, the partial circumferential gear 642, the collar 643, the first relative rotation part 644, the second relative rotation part 645, the ball 646, the collar 647, and the seesaw part 623) included in the space SL between the crankcase 610 and the crankcase cover 620L.

The support shaft 622 is supported by the crankcase 610 (case member 610L) and the crankcase cover 620L so as to be in parallel with the shaft part 700b in the space SL. The gear 641 is rotatably supported by the support shaft 622 so as to be engaged with the shaft part 700b of the clutch motor 700. The partial circumferential gear 642 includes a large-diameter gear part 642a and a small-diameter gear part 642b. As shown in FIGs. 4 and 15, the partial circumferential gear 642 is fixed to the collar 643, which is provided to the outer periphery of the crankshaft 90, such that the large-diameter gear part 642a is engaged with the gear 641 and is rotatable relative to the crankshaft 90.

The collar 643 is rotatable relative to the crankshaft 90 (see FIG. 15). The partial circumferential gear 642 and the collar 643 are configured to be rotatable relative to the crankshaft 90. The partial circumferential gear 642 and the collar 643 rotate in response to rotation of the gear 641. As shown in FIG. 4, the large-diameter gear part 642a and the small-diameter gear part 642b are provided to only a part of the outer periphery of the partial circumferential gear 642. In this way, spacing saving is planned. The collar 643 includes a gear part 643a having a diameter smaller than a diameter of the partial circumferential gear 642. That is, the collar 643 functions as a three-stage gear including the large-diameter gear part 642a of the partial circumferential gear 642, the small-diameter gear part 642b of the partial circumferential gear 642, and the gear part 643a, which has a small diameter.

The first relative rotation part 644 includes a partial circumferential gear part 644a shown in FIGs. 4, 5, and 15 and a ball retaining part 644b shown in FIG. 12. As shown in FIG. 15, the partial circumferential gear part 644a is engaged with the gear part 643a of the collar 643. As described above, the operation power transmission mechanism 640 includes a reduction gear mechanism for improving a torque. The reduction gear mechanism is located in the space SL. The ball retaining part 644b retains the ball 646 in such a manner that the ball 646 is sandwiched between the ball retaining part 644b and a ball retaining part 645b of the second relative rotation part 645, which will be described later.

The second relative rotation part 645 includes the ball retaining part 645b shown in FIG. 12. The second relative rotation part 645 is fixed to the outer periphery of the collar 647, which is provided to the outer periphery of the support shaft 622. The collar 647 is a tubular member provided to the support shaft 622 in such a manner that the collar 647 is slidable in an axial direction of the support shaft 622. The second relative rotation part 645 is movable in the axial direction of the support shaft 622 together with the collar 647. The first relative rotation part 644 is provided to the outer periphery of the collar 647, but is not fixed thereto. When the first relative rotation part 644 rotates in response to the operation power transmitted from the partial circumferential gear part 644a, the second relative rotation part 645 and the collar 647 do not rotate. Consequently, the first relative rotation part 644 and the second relative rotation part 645 rotate relative to each other with the ball 646 interposed therebetween. The ball retaining parts 644b and 645b are shaped to cause, as a result of the relative rotation, the second relative rotation part 645 to move in the axial direction of the support shaft 622 to change a distance between the first relative rotation part 644 and the second relative rotation part 645. When the second relative rotation part 645 moves in the axial direction of the support shaft 622 together with the collar 647, the first relative rotation part 644 does not move.

FIG. 12 shows a state where the first relative rotation part 644 and the second relative rotation part 645 are separated away from each other by the shortest distance. The collar 647 has an end in a direction (the left direction in the drawings) in which the collar 647 is caused to move by movement of the first relative rotation part 644 of the collar 647, the end being provided with an abutting portion 648. When the first relative rotation part 644 of the collar 647 moves, the abutting portion 648 comes into contact with the collar 647 to push a first end 623a (the upper end in the drawings) of the seesaw part 623 in the direction of the movement. The abutting portion 648 is an annular plate-shaped member disposed to surround the outer periphery of the support shaft 622. Between the collar 647 and the abutting portion 648, a spring 647a is provided in such a manner that the spring 647a is wound around the outer periphery of the support shaft 622. The spring 647a performs biasing by pushing the abutting portion 648 onto the first end 623a of the seesaw part 623.

As shown in FIGs. 6 and 12 to 14, the seesaw part 623 is supported by the support pin 624 such that the seesaw part 623 is swingable in the vehicle width direction (Z direction) in the space SL with a distal end 624a of the support pin 624 as a fulcrum. The support pin 624 is supported by the crankcase cover 620L such that the support pin 624 protrudes into the space SL, as shown in FIG. 12. Referring to FIGs. 12 to 14, when the abutting portion 648 pushes the one end 623a of the seesaw part 623 to the left, the seesaw part 623 swings, whereby an opposite end 623b of the seesaw part 623 pushes the push rod 625 to the right.

The support pin 624 has a protruding portion protruded into the space SL, and the length of the protruding portion of the support pin 624 can be adjusted by an adjuster mechanism 624b. With reference to FIGs. 12 to 14, the following will describe the adjuster mechanism 624b for the support pin 624. The adjuster mechanism 624b adjusts the length of the protruding portion of the support pin 624 in the space SL, so as to give a clearance to a stroke of the clutch 12. Consequently, even if the clutch 12 changes its size due to, e.g., heat expansion, such a change can be absorbed on the operation path. FIG. 12 shows a state where the clutch 12 is connected, the spring 647a is compressed, and the collar 647 and the abutting portion 648 are in contact with each other. In the state shown in FIG. 12, the clearance of the stroke of the clutch 12 is zero.

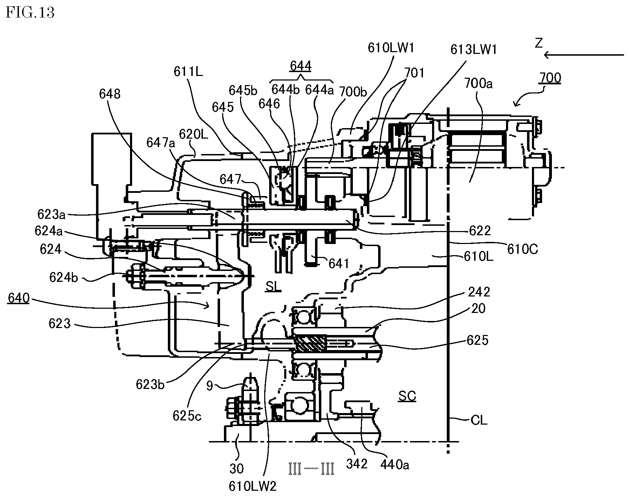

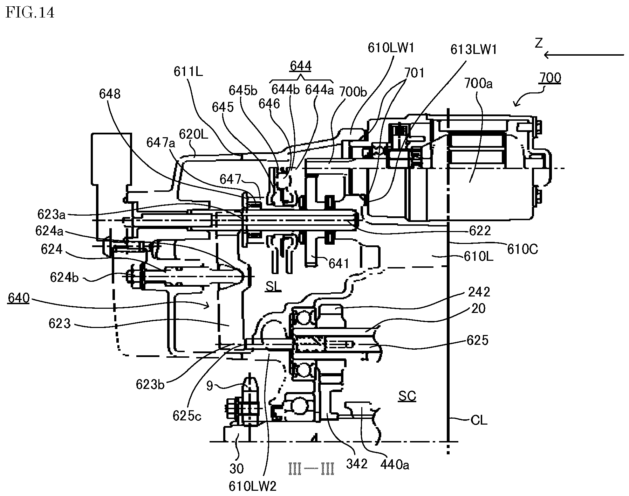

By adjusting the adjuster mechanism 624b of the support pin 624 so that the length of the protruding portion of the support pin 624 into the space SL is reduced in the state shown in FIG. 12, the spring 647a is extended as shown in FIG. 13, whereby the abutting portion 648 is pushed in a direction for separating the first end 623a of the seesaw part 623 away from the collar 647. This yields a state where an initial clearance is given to the stroke of the clutch 12. In the state shown in FIG. 13, the second relative rotation part 645 moves in a direction (the left direction in the drawings) in which the second relative rotation part 645 is separated away from the first relative rotation part 644. Then, the collar 647 also moves in a direction in which the collar 647 is separated away from the first relative rotation part 644. As a result of the movement of the collar 647 in this direction, the spring 647a is compressed, so that the collar 647 and the abutting portion 648 come into contact with each other. This yields a state where the clutch 12 is just about to start the stroke, as shown in FIG. 14. Thereafter, when the second relative rotation part 645 further moves in the direction (the left direction in the drawings) in which the second relative rotation part 645 is separated away from the first relative rotation part 644, the abutting portion 648 pushes the first end 623a (the upper end in the drawings) of the seesaw part 623 in the direction of the movement (the left direction in the drawings). Consequently, the seesaw part 623 swings, so that the second end 623b pushes the push rod 625 to the right.

As shown in FIG. 15, the push rod 625 is disposed in a void being formed inside the input shaft 20 and extending in the vehicle width direction (Z direction), in such a manner that the push rod 625 is movable reciprocatingly in the vehicle width direction. A left end 625c of the push rod 625 shown in FIG. 15 protrudes from the input shaft 20 in the vehicle width direction (Z direction) such that the left end 625c is positioned in the space SL. A right end 625b of the push rod 625 faces a left end 626b of the connection member 616 such that a ball 625a is interposed between the right end 625b of the push rod 625 and the left end 626b of the connection member 626. The ball 625a is movable in the vehicle width direction together with the push rod 625 and the connection member 626. The connection member 626 is a bar-shaped member whose longitudinal direction is in parallel with the vehicle width direction. The left end of the connection member 626 is inserted into the void being formed inside the input shaft 20 and extending in the vehicle width direction, in such a manner that the left end of the connection member 626 is movable reciprocatingly in the vehicle width direction. A right end 626a of the connection member 626 is inserted into a hole formed in a radial center of the pressure plate 125 so as to be fixed thereby.

Now, see FIG. 15. When the push rod 625 is pushed by swinging of the seesaw part 623, the resulting pushing force pushes the pressure plate 125 via the push rod 625, the ball 625a, and the connection member 626. Consequently, the pressure plate 125 moves in a direction away from the clutch boss 122 (the right direction in the drawings) against the biasing force of the clutch spring 125a. Accordingly, the pressure plate 125 loses the force for causing the friction plates 123 and the clutch plates 124 to press each other. As a result, the clutch 12 is disconnected. In a state where the clutch 12 is disconnected, the drive power from the crankshaft 90 is not inputted to the input shaft 20. Meanwhile, when the pushing pressure of the push rod 625 is released by swinging of the seesaw part 623, the push rod 625 moves toward the seesaw part 623 by the biasing force of the clutch spring 125a. Consequently, the pressure plate 125 moves toward the clutch boss 122. Accordingly, the pressure plate 125 causes the friction plates 123 and the clutch plates 124 to press each other. As a result, the clutch 12 is connected. In a state where the clutch 12 is connected, the drive power from the crankshaft 90 is inputted to the input shaft 20 via the clutch 12.

As described above, in the operation power transmission mechanism 640, the operation power from the clutch motor 700 is transmitted to the collar 643, which is provided to the outer periphery of the crankshaft 90, via the gear 641 provided to the support shaft 622, whereby the collar 643 rotates. The rotation of the collar 643 is transmitted to the first relative rotation part 644, which is provided to the support shaft 622. A path for transmitting operation power goes back and forth between the support shaft 622 and the crankshaft 90. In the present embodiment, the operation power transmission mechanism 640 is configured such that, in the space SL, the path for transmitting the operation power extends from the shaft part 700b of the clutch motor 700 toward the crankshaft 90 and extends back toward the shaft part 700b. As the path for transmitting the operation power, a relatively long path can be secured in a compact manner. The operation power transmission mechanism 640 includes a mechanism that is disposed in the space SL and that is configured to convert a rotational motion of the clutch motor 700 into a reciprocating motion for connecting or disconnecting the clutch 12.

The operation power transmission mechanism 640 pushes, with the push rod 625, the pressure plate 125 of the clutch 12 outwardly from a center in the vehicle width direction. In the present embodiment, the operation power transmission mechanism 640 may be partially disposed in the space between the crankcase 610L and the crankcase cover 620L so as to push the pressure plate 125 of the clutch 12 outwardly from the inside of the clutch 12. With this configuration, it is possible to prevent or reduce the protrusion of the engine unit in the vehicle width direction without disposing the operation power transmission mechanism outside the clutch 12. Consequently, the multistage transmission device 13 can be disposed in a compact manner.

As shown in FIGs. 10 and 15, the input shaft 20 is rotatably supported by the support walls 610LW1 and 610RW1 of the crankcase 610 via bearings 20L and 20R. As shown in FIGs. 7 and 8, the input shaft 20 is positioned above the rotational axis line 90P of the crankshaft 90 in the top-bottom direction (Y direction). In the front-rear direction, the input shaft 20 is positioned in the rear of the rotational axis line 90P of the crankshaft 90. As shown in FIG. 15, the input shaft 20 is disposed in parallel with the crankshaft 90. The input shaft 20 is provided with the plurality of (five) driving gears 241 to 245 (see FIGs. 10 and 15). The driving gears 241 to 245 are arranged in the following order from the left in FIG. 15: 242 - 243 - 244 - 245 - 241. The first-speed driving gear 241 and the second-speed driving gear 242 are integrated with the input shaft 20. The third-speed driving gear 243 and the fourth-speed driving gear 244, which are in parallel with the input shaft 20, are integrated with each other so as to constitute a slider 440b. The slider 440b is provided to the input shaft 20 by spline-fitting so as to be movable in a direction (Z direction) parallel with the input shaft 20. The slider 440b has an engagement groove 440bG that is located at a location between the third-speed driving gear 243 and the fourth-speed driving gear 244 and that extends around an entire circumference of the slider 440b in a circumferential direction. The fourth-speed driving gear 244 has a side surface that faces the fifth-speed driving gear 245 and that has a dog element 440aR engageable with a side-surface recess 245a of the fifth-speed driving gear 245. The fifth-speed driving gear 245 is provided to the input shaft 20 rotatably relative to the input shaft 20. When the slider 440b moves in the right direction in the drawings and consequently the dog element 440aR is engaged with the side-surface recess 245a, the fifth-speed driving gear 245 rotates in conjunction with the input shaft 20 together with the slider 440b.

As shown in FIG. 15, the output shaft 30 is rotatably supported by the support walls 610LW2 and 610RW2 of the crankcase 610 via bearings 30L and 30R. In the vehicle width direction (Z direction), a distance between the support walls 610LW2 and 610RW2 is longer than a distance between the support walls 610LW1 and 610RW1.

### [Clutch Motor Assisting Mechanism]

As shown in FIGs. 3 and 4, the clutch motor assisting mechanism 710 is configured to assist operation power that is outputted from the clutch motor 700 in a direction for connecting the clutch 12 or a direction for disconnecting the clutch 12. The clutch motor assisting mechanism 710 includes a gear 711 and a spring mechanism 712. The clutch motor assisting mechanism 710 is included in the space SL between the crankcase 610 and the crankcase cover 620SL.

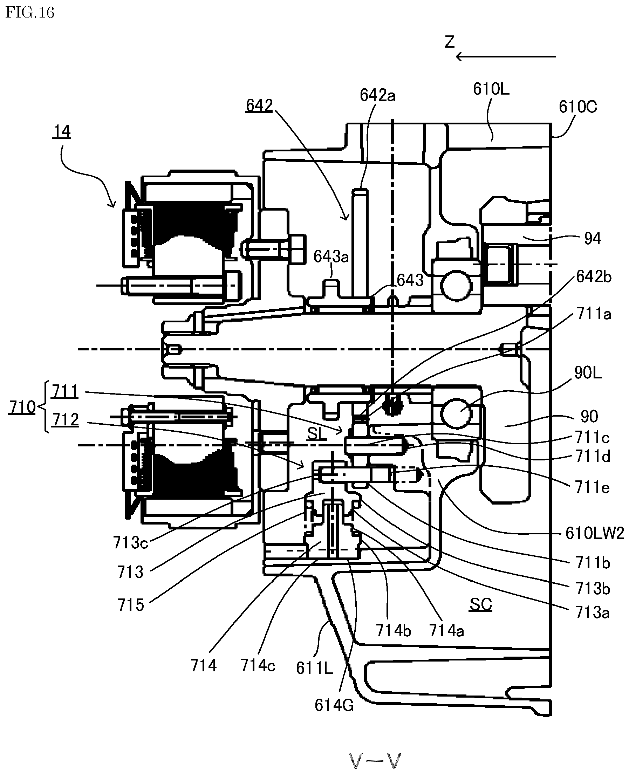

As shown in FIG. 16, the gear 711 is a partial circumferential gear provided with a gear on a part of its outer periphery. The gear 711 includes a partial circumferential gear part 711a, a spring mechanism connecting part 711b provided in a part of the outer periphery in which part the partial circumferential gear part 711a is not provided, a center pin 711d, and a connecting pin 711e. Into a center 711c of the gear 711, the center pin 711d, which is a center axis of rotation, is rotatably inserted. The center pin 711d is supported by the crankcase 610 so as be in parallel with a rotational axis line of the crankshaft 90. The partial circumferential gear part 711a of the gear 711 is engageable with the small-diameter gear part 642b of the partial circumferential gear 642. Into the spring mechanism connecting part 711b, the connecting pin 711e is rotatably inserted. The connecting pin 711e has a center axis that is in parallel with the rotational axis line of the center pin 711d. The connecting pin 711e is rotatable about the center pin 711d.

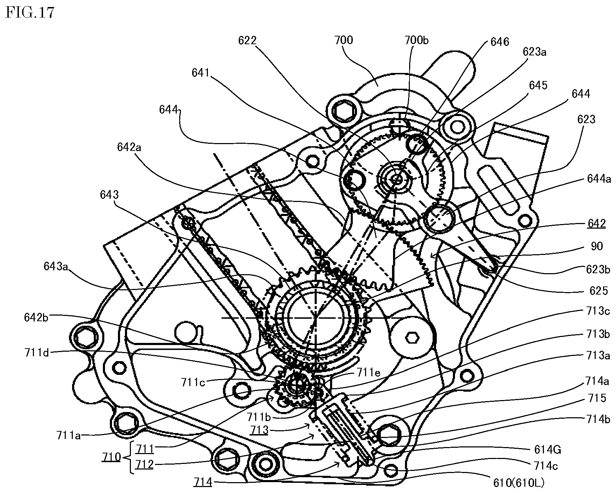

The spring mechanism 712 includes an outer tube flange 713, an inner tube flange 714, and a coil spring 715. The outer tube flange 713 is constituted by an outer tube part 713a, a flange part 713b, and a gear connecting part 713c. As shown in FIG. 17, the flange part 713b is disposed at a portion of the outer periphery of the outer tube part 713a, the portion being close to a first end (the upper left end in the drawings). The gear connecting part 713c is provided to cover the first end of the outer tube part 713a. The outer tube part 713a has a second end (the lower right end in the drawings) that is opened. The inner tube flange 714 is constituted by an inner tube part 714a, a flange part 714b, and a crankcase support part 714c. As shown in FIG. 17, the flange part 714b is disposed at a portion of the outer periphery of the inner tube part 714a, the portion being close to a first end (the lower right end in the drawings). The crankcase support part 714c is provided to cover the first end of the inner tube part 714a. The inner tube part 714a has a second end (the upper left end in the drawings) that is opened. The outer tube part 713a of the outer tube flange 713 has an inner diameter larger than an outer diameter of the inner tube part 714a of the inner tube flange 714. The second end of the inner tube part 714a of the inner tube flange 714 is slidably inserted into the second end of the outer tube part 713a of the outer tube flange 713. The coil spring 715 is provided on the outer periphery of the outer tube part 713a of the outer tube flange 713. The coil spring 715 is in contact with the flange part 713b of the outer tube flange 713 and the flange part 714b of the inner tube flange 714 so as to give a biasing force in a direction for making the outer tube flange 713 and the inner tube flange 714 separate from each other. Into the gear connecting part 713c of the outer tube flange 713, the connecting pin 711e of the gear 711 is rotatably inserted. The crankcase support part 714c of the inner tube flange 714 is rotatably supported by a support part 614G of the crankcase 610. The inner tube flange 714 rotates about the crankcase support part 714c.

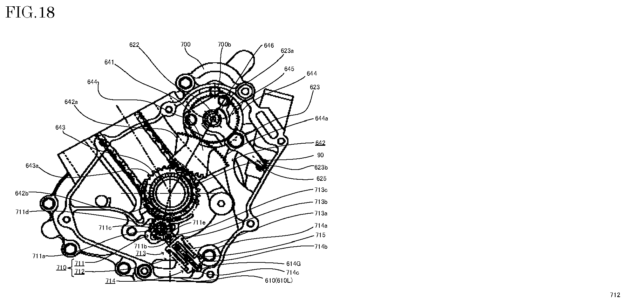

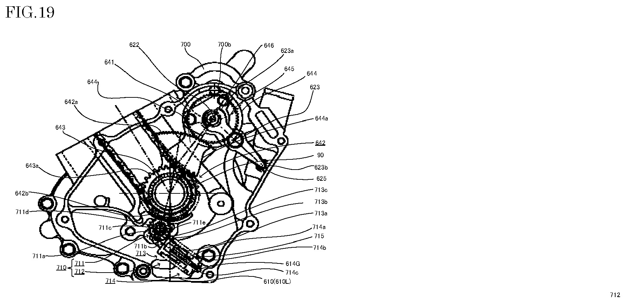

With reference to FIGs. 17 to 19, the following will specifically describe a relation between the operation of the operation power transmission mechanism 640 and the clutch motor assisting operation of the clutch motor assisting mechanism 710. Firstly, the following will describe how the clutch 12 transitions from a connected state to a disconnected state. FIG. 17 shows a state where the clutch 12 is connected. In the state of FIG. 17, the shaft part 700b of the clutch motor 700 rotates counterclockwise in the drawings. At this time, the gear 641 rotates clockwise, whereby the partial circumferential gear 642 and the gear part 643a of the collar 643 rotate counterclockwise. Consequently, the partial circumferential gear part 644a of the first relative rotation part 644 rotates clockwise, so that the ball 646 causes the second relative rotation part 645 to move in a direction away from the first relative rotation part 644 (in the direction coming out of the drawing plane of the drawings). As a result of the movement of the second relative rotation part 645 in the direction coming out of the drawing plane of the drawings, a state where the collar 647 and the abutting portion 648 are separated away from each other (see FIGs. 13 and 17) is turned into a state where the collar 647 and the abutting portion 648 are in contact with each other (see FIGs. 14 and 18). Thereafter, the collar 647 causes the abutting portion 648 and the first end 623a of the seesaw part 623 to move in the direction coming out of the drawing plane of the drawings, so that the second end 623b of the seesaw part 623 pushes the push rod 625 in the direction going into the drawing plane of the drawings (see FIG. 14). Against the biasing force of the clutch spring 125a, the push rod 625 pushes the pressure plate 125 in the direction going into the drawing plane of the drawings (see FIG. 14). Consequently, the clutch 12 transitions from the connected state (FIG. 18) to the disconnected state (FIG. 19) through a half-clutch state.

In the state where the clutch 12 is connected (FIG. 17), the connecting pin 711e of the gear 711 of the clutch motor assisting mechanism 710 is located on the right of a line segment connecting the center pin 711d of the gear 711 and the crankcase support part 714c of the spring mechanism 712 in FIG. 17 (this state will be hereinafter referred to as state X). At this time, the small-diameter gear part 642b of the partial circumferential gear 642 rotates counterclockwise, so that the gear 711 of the clutch motor assisting mechanism 710 rotates clockwise. As a result of the clockwise movement of the gear 711, the spring mechanism 712 rotates counterclockwise shown in the drawings with the crankcase support part 714c as a fulcrum. This brings the clutch motor assisting mechanism 710 into a state where the center pin 711d of the gear 711, the connecting pin 711e of the gear 711, and the crankcase support part 714c of the spring mechanism 712 are aligned in a straight line, as shown in FIG. 18 (this state will be hereinafter referred to as state Y). During the transition from state X to state Y, the spring mechanism 712 rotates with its entire length (i.e., a length from the gear connecting part 713c to the crankcase support part 714c) being compressed. That is, the spring mechanism 712 rotates about the crankcase support part 714c while being opposed to the biasing force of the coil spring 715. In other words, the spring mechanism 712 gives the gear 711 a rotational force against the clockwise rotational force. In the state shown in FIG. 18 (state Y), the entire length of the spring mechanism 712 is most compressed. The state shown in FIG. 18 (state Y) corresponds to a state where the clutch 12 is just about to start the stroke, i.e., a state where the collar 647 is in contact with the abutting portion 648 and the collar 647 is just about to push the first end 623a of the seesaw part 623 (see FIG. 14). Thus, in the state where the clutch 12 is connected, during the transition the state where the collar 647 and the abutting portion 648 are separated away from each other (state X) to the state where the collar 647 and the abutting portion 648 come into contact with each other (state Y), the force against the rotational force is applied to the shaft part 700b of the clutch motor 700.

Thereafter, the small-diameter gear part 642b of the partial circumferential gear 642 further rotates counterclockwise from the state Y, and accordingly the gear 711 further rotates clockwise. As a result of the clockwise rotation of the gear 711, the spring mechanism 712 further rotates counterclockwise in the drawings with the crankcase support part 714c as a fulcrum. This brings the clutch motor assisting mechanism 710 into a state where the connecting pin 711e of the gear 711 is located on the left of a line segment connecting the center pin 711d of the gear 711 and the crankcase support part 714c of the spring mechanism 712, as shown in FIG. 19 (this state will be hereinafter referred to as state Z). During the transition from state Y to state Z, the spring mechanism 712 rotates with its entire length (i.e., the length from the gear connecting part 713c to the crankcase support part 714c) being extended. That is, the spring mechanism 712 rotates about the crankcase support part while receiving the biasing force of the coil spring 715. In other words, the spring mechanism 712 gives the gear 711 a rotational force for assisting the clockwise rotational force, against the biasing force of the clutch spring 125a. In the state shown in FIG. 19 (state Z), the entire length of the spring mechanism 712 is most extended, and the clutch 12 is disconnected. Thus, during the transition from the state where the clutch 12 is just about to start the stroke (state Y) to the state where the clutch 12 is disconnected (state Z) through the half-clutch state, the force for assisting the rotational force is applied to the shaft part 700a of the clutch motor 700.

Next, the following will describe how the clutch 12 transitions from the disconnected state to the connected state. FIG. 19 shows the state where the clutch 12 is disconnected. In the state of FIG. 19, the shaft part 700b of the clutch motor 700 rotates clockwise. At this time, the gear 641 rotates counterclockwise in the drawings, whereby the partial circumferential gear 642 and the gear part 643a of the collar 643 rotate clockwise. Consequently, the partial circumferential gear part 644a of the first relative rotation part 644 rotates counterclockwise, so that the ball 646 causes the second relative rotation part 645 to move in a direction approaching the first relative rotation part 644 (in the direction going into the drawing plane of the drawings). As a result, the second relative rotation part 645 causes the first end 623a of the seesaw part 623 in the direction going into the drawing plane of the drawings, so that the second end 623b of the seesaw part 623 is pushed by the push rod 625 in the direction coming out of the drawing plane of the drawings. The push rod 625 is pushed in the direction coming out of the drawing plane of the drawings by the pressure plate 125 to which the biasing force of the clutch spring 125a is applied. Consequently, the clutch 12 transitions from the disconnected state (FIG. 19) to the connected state (FIG. 18) through the half-clutch state. After the clutch 12 is connected, the partial circumferential gear part 644a of the first relative rotation part 644 further rotates counterclockwise, so that the ball 646 causes the second relative rotation part 645 to further move in the direction approaching the first relative rotation part 644 (in the direction going into the drawing plane of FIG. 18). Then, the spring 647a is extended, so that the collar 647 and the abutting portion 648 are separated away from each other (FIG. 17).

At this time, the small-diameter gear part 642b of the partial circumferential gear 642 rotates clockwise, whereby the gear 711 of the clutch motor assisting mechanism 710 rotates counterclockwise. As a result of the counterclockwise rotation of the gear 711, the spring mechanism 712 rotates clockwise with the crankcase support part 714c as a fulcrum. Consequently, the clutch motor assisting mechanism 710 transitions from state Z shown in FIG. 19 to state Y shown in FIG. 18. During the transition from state Z to state Y, the spring mechanism 712 rotates with its entire length (i.e., the length from the gear connecting part 713c to the crankcase support part 714c) being compressed. That is, the spring mechanism 712 rotates about the crankcase support part 714c while being opposed to the biasing force of the coil spring 715. In other words, the spring mechanism 712 gives the gear 711 a rotational force against the counterclockwise rotational force. Thus, during the transition from the state where the clutch 12 is disconnected (state Z) to the state where the clutch 12 is connected (state Y) through the half-clutch state, the force against the rotational force is applied to the shaft part 700a of the clutch motor 700.

Thereafter, the small-diameter gear part 642b of the partial circumferential gear 642 further rotates clockwise from the state Y, and accordingly the gear 711 further rotates counterclockwise. As a result of the counterclockwise rotation of the gear 711, the spring mechanism 712 further rotates clockwise about the crankcase support part 714c. Consequently, the clutch motor assisting mechanism 710 transitions from state Y shown in FIG. 18 to state X shown in FIG. 17. During the transition from state Y to state X, the spring mechanism 712 rotates with its entire length being extended. Thus, the spring mechanism 712 rotates about the crankcase support part 714c while receiving the biasing force of the coil spring 715. In other words, the spring mechanism 712 gives the gear 711 a rotational force for assisting the counterclockwise rotational force. Thus, in the state where the clutch 12 is connected, during the transition from the state where the collar 647 and the abutting portion 648 are in contact with each other (state Y, see FIG. 14) to the state where the collar 647 and the abutting portion 648 are separated away from each other (state Z, see FIG 13), the force for assisting the rotational force is applied to the shaft part 700b of the clutch motor 700.

Here, θ1 denotes a rotation angle by which the gear 711 rotates counterclockwise from state Y to achieve the state where the clutch 12 is completely connected (state X). Meanwhile, θ2 denotes a rotation angle by which the gear 711 rotates clockwise from state Y to achieve the state where the clutch 12 is completely disconnected (state Z). In the present embodiment, the rotation angle θ1 is set smaller than the rotation angle θ2.

That is, the clutch motor assisting mechanism 710 includes the following mechanisms.
1. In order to bring the clutch 12 into the disconnected state (state Z (FIG. 19)) from the connected state (state X (FIG. 17)), the clutch motor 700 needs to rotate against the biasing force of the clutch spring 125a. During a period until the disconnected state (state Z (FIG. 19)) is attained after the clutch 12 has started the stroke (state Y (FIG. 18)), the spring mechanism E assists, by the biasing force, the rotation force of the clutch motor 700 against the biasing force of the clutch spring 125a. With this, the clutch motor assisting mechanism 710 reduces the load given to the clutch motor 700 during the transition of the clutch 12 from the connected state (state X) to the disconnected state (state Z).
2. In the state where the clutch 12 is connected (state X), a rotational force in a direction opposite to the direction of the rotational force of the clutch motor 700 applied to disconnect the clutch 12 is applied. Meanwhile, in the state where the clutch 12 is disconnected (state Z), a rotational force in a direction opposite to the direction of the rotational force of the clutch motor 700 applied to connect the clutch 12 is applied. With this, it is possible to hold the clutch 12 in the connected state or the disconnected state.

### (Variations)

Instead of the coil spring 715, the spring mechanism 712 may employ a permanent magnet to achieve the biasing force. Specifically, a permanent magnet may be attached to the inside of the outer tube part 713a of the outer tube flange 713, and a permanent magnet may be attached to the inside of the inner tube part 714a of the inner tube flange 714. These permanent magnets are disposed such that their sides having the same polarity face each other when the inner tube flange is inserted into the outer tube flange. This can yield a biasing force applied in a direction for causing the spring mechanism 712 to extend, even without using the coil spring 715.

### [Multistage Transmission device]

As shown in FIG. 10, the shift motor 600 is supported by the support wall 610RW2, which supports the input shaft 20 and the output shaft 30. The support wall 610RW2 has the inside surface 613RW2. The inside surface 613RW2 faces the center line CL in the vehicle width direction (Z direction). The body part 600a of the shift motor 600 is mounted to the inside surface 613RW2 such that the shaft part 600b extends outwardly in the vehicle width direction from the body part 600a. Between the body part 600a of the shift motor 600 and the inside surface 613RW2 of the support wall 610RW2, a heat-resistant vibration control member 601 is provided. The heat-resistant vibration control member 601 is in contact with both the body part 600a and the inside surface 613RW2. The heat-resistant vibration control member 601 is an annular plate-shaped member that is radially spaced from the shaft part 600b and circumferentially surrounds the shaft part 600b. The heat-resistant vibration control member 601 is made of a heat-resistant vibration-control rubber, for example.

As shown in FIG. 12, the clutch motor 700 is supported by the support wall 610LW1, which supports the crankshaft 90. The support wall 610LW1 has the inside surface 613LW1. The inside surface 613LW1 faces the center line CL in the vehicle width direction (Z direction). The body part 700a of the clutch motor 700 is mounted to the inside surface 613LW1 such that the shaft part 700b extends outwardly in the vehicle width direction from the body part 700a. Between the body part 700a of the clutch motor 700 and the inside surface 613LW1 of the support wall 610LW1, a heat-resistant vibration control member 701 is provided. The heat-resistant vibration control member 701 is in contact with both the body part 700a and the inside surface 613LW1. The heat-resistant vibration control member 701 is an annular plate-shaped member that is radially spaced from the shaft part 700b and circumferentially surrounds the shaft part 700b. The heat-resistant vibration control member 701 is made of a heat-resistant vibration-control rubber, for example.

In the present embodiment, the shift motor 600 is supported by the support wall 610RW2 of the crankcase 610R. Meanwhile, the clutch motor 700 is supported by the support wall 610LW1 of the crankcase 610L, which is not the crankcase 610R. The shaft part 600b of the shift motor 600 and the shaft part 700b of the clutch motor 700 extend toward opposite sides in the vehicle width direction. Thus, the motor installation position of the shift motor 600 and the motor installation position of the clutch motor 700 do not overlap each other in the front-rear direction and the top-bottom direction. That is, the motor installation positions can be dispersed. In addition, two motors, specifically, the shift motor 600 and the clutch motor 700 are respectively installed to the left and right parts of the left-right split type crankcase in a dispersed manner. Thus, protrusion of the motor installation positions in these parts of the crankcase can be prevented or reduced. Consequently, the whole of the multistage transmission device 13 including the shift motor 600 and the clutch motor 700 can be disposed in a compact manner.

As shown in FIGs. 7 and 8, the output shaft 30 is positioned below the input shaft 20 in the top-bottom direction (Y direction). In the front-rear direction, the output shaft 30 is positioned in the rear of the input shaft 20. The input shaft 20, which is provided with the clutch 12, is positioned above the crankshaft 90 and the output shaft 30.

As shown in FIG. 15, the output shaft 30 is positioned in parallel with the crankshaft 90. The output shaft 30 is provided with the plurality of (five) driven gears 341 to 345 (see FIG. 10). The plurality of driven gears 341 to 345 are disposed to be engaged with their corresponding driving gears 241 to 245. The first-speed driven gear 341 to the fourth-speed driven gear 344 are mounted to the output shaft 30 rotatably relative to the output shaft 30.

Between the second-speed driven gear 342 and the third-speed driven gear 343, a slider 440a is provided. The slider 440a is provided to the output shaft 30 by spline-fitting so as to be movable in the direction (Z direction) parallel with the output shaft 30. The slider 440a has an engagement groove 440aG extending around an entire circumference of the slider 440a in a circumferential direction. The slider 440a has a side surface that faces the second-speed driven gear 342 and that has a dog element 440aL engageable with a side-surface recess 342a of the second-speed driven gear 342. When the slider 440a moves in the left direction in the drawings and consequently the dog element 440aL is engaged with the side-surface recess 342a, the second-speed driven gear 342 rotates in conjunction with the output shaft 30 together with the slider 440a. The slider 440a has a side surface that faces the third-speed driven gear 343 and that has a dog element 440aR engageable with a side-surface recess 343a of the third-speed driven gear 343. When the slider 440a moves in the right direction in the drawings and consequently the dog element 440aR is engaged with the side-surface recess 343a, the third-speed driven gear 343 rotates in conjunction with the output shaft 30 together with the slider 440a.

Between the fourth-speed driven gear 344 and the first-speed driven gear 341, a slider 440c designed to include the fifth-speed driven gear 345 is provided. The slider 440c is provided to the output shaft 30 by spline-fitting so as to be movable in the direction parallel with the output shaft 30. The slider 440c has an engagement groove 440cG extending around an entire circumference of the slider 440c in a circumferential direction. The slider 440c has a side surface facing the fourth-speed driven gear 344 and having a dog element 440CL engageable with a side-surface recess 344a of the fourth-speed driven gear 344. When the slider 440c moves in the left direction in the drawings so that the dog element 440CL is engaged with the side-surface recess 344a, the fourth-speed driven gear 344 rotates in conjunction with the output shaft 30 together with the slider 440c. The slider 440c has a side surface facing the first-speed driven gear 341 and having a dog element 440cR engageable with a side-surface recess 341a of the first-speed driven gear 341. When the slider 440c moves in the right direction in the drawings and consequently the dog element 440cR is engaged with the side-surface recess 341a, the first-speed driven gear 341 rotates in conjunction with the output shaft 30 together with the slider 440c.

As a result of the movement of each of the sliders 440a to 440c along the input shaft 20 or the output shaft 30 in the left-right direction in the drawings, a gear stage is set. As shown in FIG. 15, when the sliders 440a to 440c are respectively positioned at "neutral", "neutral", and "neutral", the multistage transmission device 13 is set at a neutral position. When the sliders 440a to 440c are respectively positioned at "neutral", "neutral", and "right", the multistage transmission device 13 is set at the first speed. When the sliders 440a to 440c are respectively positioned at "left", "neutral", and "neutral", the multistage transmission device 13 is set at the second speed. When the sliders 440a to 440c are respectively positioned at "right", "neutral", and "neutral", the multistage transmission device 13 is set at the third speed. When the sliders 440a to 440c are respectively positioned at "neutral", "neutral", and "left", the multistage transmission device 13 is set at the fourth speed. When the sliders 440a to 440c are respectively positioned at "neutral", "right", and "neutral", the multistage transmission device 13 is set at the fifth speed. The "neutral" corresponds to the neutral position (the position shown in FIG. 15). The "right" corresponds to the position at which the dog element of a corresponding one of the sliders having moved from the neutral position to the right is engaged with a corresponding one of the side-surface recesses. The "left" corresponds to the position at which the dog element of a corresponding one of the sliders having moved from the neutral position to the left is engaged with a corresponding one of the side-surface recesses.

The output shaft 30 has a first end 30a that penetrates through the bearing 30L and protrudes to the outside of the crankcase 610. The first end 30a of the output shaft 30 is provided with the drive sprocket 9. As described above, the drive power transmitted to the output shaft 30 is transmitted to the rear wheel 5 (see FIG. 2), which is the driving wheel.

Operations of the sliders 440a to 440c for setting a gear stage are controlled by the shift motor 600. By the shift motor 600, the slider 440b, which is provided to the input shaft 20, and the sliders 440a and 440c, which are provided to the output shaft 30, are operated. Targets that are to be operated by the shift motor 600 are provided to each of the input shaft 20 and the output shaft 30.

### [Shift Motor]

The shift motor 600 includes the body part 600a shaped in a bottomed cylinder and the shaft part 600b (e.g., see FIGs. 10 and 15). The body part 600a includes a stator and a rotor. For example, in the shift motor 600, either one of the stator and the rotor includes a permanent magnet. The shaft part 600b rotatably protrudes from the body part 600a. The shaft part 600b is configured to output operation power by rotation. The shift motor 600 is configured to cause the shaft part 600b to rotate for up-shifting or down-shifting such that a rotation direction of the shaft part 600b for up-shifting and a rotation direction of the shaft part 600b for down-shifting are opposite to each other. The shift motor 600 satisfies all of (A) to (C) below.
(A) The shaft part 600b is in parallel with or substantially in parallel with the input shaft 20, the output shaft 30, and the shaft 50S (see FIG. 10) of the shift cam 50. The expression "substantially" herein means that a tolerance or a manufacturing error is permitted. These shafts are in parallel with the vehicle width direction (Z direction), for example.
(B) In the vehicle width direction, the body part 600a is at least partially located inward of the outside surfaces 620LS and 620RS of the crankcase covers 620L and 620R. The expression "inward" means a position that is closer to the center line CL in the vehicle width direction.

Here, portions of the outer side surfaces 620LS and 620RS of the crankcase covers 620L and 620R that are to be compared in location with the body part 600a are "outermost portions in the vehicle width direction", for example. Focusing on the right side of the vehicle, the "outermost portion in the vehicle width direction" of the outer side surface 620RS is a portion that is located outward of the clutch 12 and side by side with the clutch 12 in the vehicle width direction, as shown in FIG. 15. The body part 600a is closer to the center line CL than is the portion when seen in the vehicle width direction. Focusing on the left side of the vehicle, the "outermost portion in the vehicle width direction" of the outer side surface 620LS is a portion that is located side by side with the starting generator 14 in the vehicle width direction, as shown in FIG. 15. The body part 600a is closer to the center line CL than is the portion when seen in the vehicle width direction. As described above, the motorcycle 1 according to the present embodiment is configured such that both of the left and right parts of the vehicle satisfy the requirement (B). Alternatively, the motorcycle 1 may be configured such that either one of the left and right parts of the vehicle satisfies the requirement (B).

The portions of the outer side surfaces 620LS and 620RS of the crankcase covers 620L and 620R that are to be compared in location with the body part 600a may alternatively be "portions that are located side by side with or overlap the body part 600a in the vehicle width direction". In the present embodiment, focusing on the right part of the vehicle, the body part 600a is closer to the center line CL than is the "portion that is located side by side with or overlaps the body part 600a in the vehicle width direction" of the outer side surface 620RS, as shown in FIG. 15.

As the condition (B) described above, the following condition may alternatively be adopted. The shift motor 600 may be disposed such that the body part 600a is at least partially located inward of the mating plane 611L between the crankcase 610 and the crankcase cover 620L and the mating plane 611R between the crankcase 610 and the crankcase cover 620R. This requirement may be applied to only one of the left and right parts of the vehicle or both of the left and right parts of the vehicle. The shift motor 600 may be disposed such that the body part 600a overlaps the mating plane 610C. The shift motor 600 may be disposed such that the whole of the body part 600a is positioned between the mating planes 611L and 611R in the vehicle width direction. Consequently, it is possible to prevent or reduce protrusion of the shift motor 600 in the vehicle width direction more effectively.

(C) The shaft part 600b is located in tje rear of the output shaft 30 in the front-rear direction (X direction), when seen in the vehicle width direction (see FIG. 8, for example). The output shaft 30 is located between the shaft part 600b and the shaft 50S of the shift cam 50. The shaft 50S of the shift cam 50 is located in front of the output shaft 30. By satisfying (C) as well as (A) and (B), the excellent effect of the downsizing of the multistage transmission device 13 can be attained.

According to the present embodiment, the crankcase 610 has, in its inside, the space SC having an upper rear portion in which the output shaft 30 and the driven gears 341 to 345 are accommodated, as shown in FIGs. 7 and 8. For this purpose, the crankcase 610 itself has a profile (contour) defining the space SC whose upper rear portion protrudes further rearward than is the lower rear portion of the space SC. Protruding portions 612b and 612c, which will be described later, are formed outside the space SC so that the engine unit 6 is suspended from the protruding portions 612b and 612c. The protruding portions 612b and 612c are not protrusions of the case itself, and do not affect the profile of the case. In the front-rear direction (X direction), the body part 600a of the shift motor 600 is disposed to overlap the lower rear portion of the space SC. The body part 600a of the shift motor 600 is disposed in rear of the lower rear portion of the space SC, rather than in rear of the upper rear portion of the space SC.

As shown in FIGs. 7 and 8, the protruding portions 612b and 612c of the crankcase 610 are located outside the space SC of the crankcase 610. The protruding portion 612b protrudes from an upper rear part of the crankcase 610 toward an upper rear side outside the space SC. The protruding portion 612b has a distal end provided with an engine suspending portion 630b. The protrusion 612c protrudes from a lower rear part of the crankcase 610 toward a lower rear side outside the space SC. The protrusion 612c has a distal end provided with an engine suspending portion 630c. The cylinder head 96 has an upper rear portion provided with an engine suspending portion 630a. The engine unit 6 is suspended from the vehicle body frame 550 via the plurality of engine suspending portions 630a to 630c. The crankcase 610 has the two engine suspending portions 630b and 630c. The two engine suspending portions 630b and 630c are disposed at different positions in the top-bottom direction (Y direction). In the present embodiment, the two engine suspending portions 630b and 630c are disposed so as to at least partially overlap each other in the top-bottom direction.

The shift motor 600 is disposed such that the body part 600a is at least partially located between the two engine suspending portions 630b and 630c in the top-bottom direction (Y direction). The body part 600a at least partially overlaps the two engine suspending portions 630b and 630c in the top-bottom direction. When seen in the vehicle width direction (Z direction), the body part 600a at least partially overlaps a straight line passing through the two engine suspending portions 630b and 630c. The shift motor 600 is disposed along a profile of a rear portion of the crankcase 610 itself. With this configuration, it is possible to prevent or reduce the shift motor 600 from protruding greatly outwardly. Consequently, it is possible to prevent or reduce upsizing of the exterior shape of the engine 11. The crankcase 610 does not have a recess where the shift motor 600 can be stored. Since the shift motor 600 is not stored in the recess, the shift motor 600 is easily cooled, and therefore an increase in temperature of the shift motor 600 can be prevented or reduced. A side surface (left side surface) of the shift motor 600 in the vehicle width direction (Z direction) is not covered with any constituent member of the engine 11, but is exposed (see FIGs. 4, 5, 10, and 15). The movable elements of the engine 11 are not disposed on an axial line of the shift motor 600. The movable elements may be rotating elements. Examples of the rotating elements encompass the clutch 12, the driving gears 241 to 245, and the driven gears 341 to 345. Note that the drive chain 10 for transmitting drive power to the rear wheel 5 is not included in the movable elements of the engine 11.

In the present embodiment, both the shift motor 600 and the shift cam 50 are disposed in an area (lower area) below the output shaft 30 in the top-bottom direction. That is, in the top-bottom direction (Y direction), the shaft part 600b and the shaft 50S of the shift cam 50 are located below the input shaft 20 and the output shaft 30 when seen in the vehicle width direction (see FIG. 8, for example). The output shaft 30 is located between the shaft part 600b and the shaft 50S of the shift cam 50. The layout of the shift motor and the shift cam is not limited to the example shown in the embodiment.

As shown in FIG. 9, the shift motor 600 is disposed such that a gap exists between the shift motor 600 and the clutch 12 when seen in the vehicle width direction (Z direction). In other words, the shift motor 600 is disposed so as not to overlap the clutch 12 radially. As shown in FIG. 9, the clutch 12 has a circular shape in a whole view when seen in the vehicle width direction (Z direction). When seen in the vehicle width direction, the clutch 12 is a relatively large element among the constituent elements of the engine 11. For example, the clutch 12 is greater in diameter than the maximum-speed driving gear 245 among the driving gears 241 to 245 for all gear stages (see FIG. 15). The clutch 12 is greater in diameter than the minimum-speed driven gear 341 out of the driven gears 341 to 345 for all gear stages (see FIG. 15). Thus, a long distance is secured between the shift motor 600 and the input shaft 20, a long distance is secured between the shift motor 600 and the output shaft 30, and a long distance is secured between the shift motor 600 and the crankshaft 90. According to the motorcycle 1, the whole of the multistage transmission device 13 can be disposed in a compact manner, and long distances can be secured between the shift motor 600 and the shafts.

The shift motor 600 causes the sliders 440a to 440c to operate via a dog engagement mechanism 70 (see FIGs. 10 and 15). The dog engagement mechanism 70 includes idle gears 62 and 64, an index cam 130, the shift cam 50, shift forks 53a to 53c, and a folk guide shaft 60.

As shown in FIG. 10, the idle gear 62 is a two-stage gear constituted by a large-diameter gear 62a and a small-diameter gear 62b. The idle gear 64 is a two-stage gear constituted by a large-diameter gear 64a and a small-diameter gear 64b. The idle gears 62 and 64 are rotatably supported by the crankcase 610 (case member 610R) and the crankcase cover 620R such that rotational axis lines of the idle gears 62 and 64 are in parallel with the vehicle width direction (Z direction). The idle gears 62 and 64 are rotatably provided in the space SR between the crankcase 610 (case member 610R) and the crankcase cover 620R. The shaft part 600b of the shift motor 600 is engaged with the large-diameter gear 62a of the idle gear 62. The small-diameter gear 62b of the idle gear 62 is engaged with the large-diameter gear 64a of the idle gear 64. The small-diameter gear 64b of the idle gear 64 is engaged with a gear part 130a of the index cam 130. Thus, the idle gears 62 and 64 function as reduction gears. In the present embodiment, a relatively long distance can be secured between the shaft part 600b of the shift motor 600 and the shaft 50S of the shift cam 50 in their radial directions. Specifically, the shaft 50S can be disposed in front of the output shaft 30, and the shaft part 600b can be disposed in rear of the output shaft 30.

As shown in FIG. 10, the index cam 130 is fixed to a first end (the right end in the drawings) of the shift cam 50 coaxially to the shift cam 50. The first end of the shift cam 50 is rotatably supported by the crankcase 610 (case member 610R) via the bearing 50R. A second end (the left end in the drawings) of the shift cam 50 is rotatably supported by the crankcase 610 (case member 610L). The shift cam 50 rotates in conjunction with the index cam 130 with its rotational axis line being in parallel with the vehicle width direction (Z direction). The second end of the shift cam 50 is provided with a detected shaft 50a, which is coaxial to the shift cam 50. The crankcase 610 is provided with a shift-cam phase sensor 720, which is disposed at a location away from the second end of the shift cam 50 in the axial direction of the shift cam 50. The shift-cam phase sensor 720 is configured to detect a phase (a rotational position in a circumferential direction) of the shift cam 50 by detecting the detected shaft 50a. As shown in FIGs. 9 to 11, the index cam 130 includes the gear part 130a having a disk-like shape and a star-shaped part 130b having a star-like shape. The gear part 130a and the star-shaped part 130b are fixed so as to be adjacent to each other in the vehicle width direction. The star-shaped part 130b has a radial outer peripheral surface having protrusions and recesses that are arranged continuously in the circumferential direction and that define a concave and convex shape in the radial direction. Multiple (six) recesses (see FIG. 9) constituting recessed parts of the concave and convex shape function as the gear stage positions of the shift cam 50 for the gear stages, respectively. The gear stage positions are associated with the gear positions, respectively. In the present embodiment, the multistage transmission device 13 is a bottom-neutral type five-speed transmission device. The multistage transmission device 13 has five gear stages in addition to the neutral position.

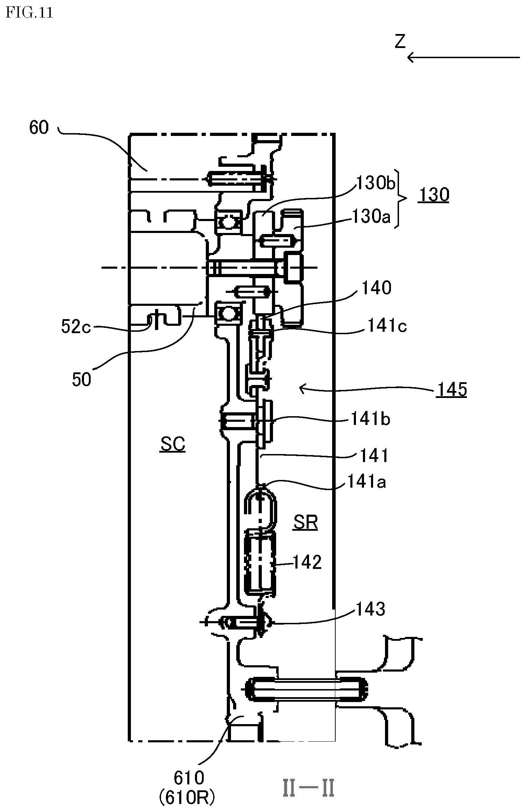

As shown in FIGs. 9 and 11, a phase holding mechanism 145 is provided at a location outward of the star-shaped part 130b of the index cam 130 in a radial direction of the index cam 130. The phase holding mechanism 145 is a mechanism for holding a phase of the index cam 130. While gear shifting is not performed, the phase holding mechanism 145 holds the index cam 130 at a phase defined by its corresponding certain rotation angle, i.e., at a gear stage position described above. When the index cam 130 is held, the shift cam 50 is also held. As shown in FIGs. 9 and 11, the phase holding mechanism 145 includes a roller 140, a retainer 141, a spring 142, and a latched part 143.

The roller 140 is supported by a shaft 141c of the retainer 141 in such a manner that the roller 140 permits rotation of the star-shaped part 130b while being in contact with the star-shaped part 130b. As shown in FIG. 9, the retainer 141 is a flat-plate shaped member having a hole 141a, a shaft 141b, and a shaft 141c arranged in a triangle when seen in the vehicle width direction (Z direction). The retainer 141 is supported by the shaft 141b so as to be rotatable relative to the crankcase 610 (case member 610R). The spring 142 is hooked at the hole 141a of the retainer 141 and the latched part 143 so that the spring 142 generates a pulling force. The pulling force generated by the spring 142 causes the retainer 141 to revolve about the shaft 141b. Consequently, the roller 140, which is supported rotatably by the shaft 141c of the retainer 141, is biased toward the star-shaped part 130b so as to be pressed onto the star-shaped part 130b. This configuration permits rotation of the index cam 130 and the shift cam 50 while gear-shifting is performed, and holds the phases of the index cam 130 and the shift cam 50 while gear-shifting is not performed.

As described above, the shift cam 50 is rotatably supported by the crankcase 610. As shown in FIG. 10, the shift cam 50 has an outer peripheral surface provided with the cam grooves 52a to 52c. The cam grooves 52a to 52c are one example of the cam part. The cam part is not necessarily a groove, and may alternatively be a protrusion. Upon reception of the drive power outputted from the shift motor 600, the shift cam 50 rotates intermittently. The shift cam 50 is in parallel with the input shaft 20 and the output shaft 30.

The cam grooves 52a to 52c are configured to respectively accept parts of the shift forks 53a to 53c that are guided by the cam grooves 52a to 52c to move in the axial direction of the shift cam 50 along with rotation of the shift cam 50 (see FIG. 10). The shift forks 53a to 53c are disposed movably over the folk guide shaft 60 in the axial direction, and reside in the engagement grooves 440aG to 440cG of the sliders 440a to 440c, respectively. The folk guide shaft 60 is disposed in parallel with the shift cam 50 (see FIG. 10).

In the multistage transmission device 13, the plurality of driving gears 241 to 245 are constantly engaged with their plurality of corresponding driven gears 341 to 345. The multistage transmission device 13 is a constant mesh type transmission device. In the multistage transmission device 13, a combination of a driving gear and a driven gear for transmitting drive power is selected by rotation of the shift cam 50. When the shift cam 50 rotates, the shift forks 53a to 53c move in the axial direction along the cam grooves 52a to 52c. Consequently, the sliders 440a to 440c move in the axial direction together with the shift forks 53a to 53c. The correspondence relations between the positions of each of the sliders 440a to 440c and each of the gear stages are as described above.

As described above, in the present embodiment, the shift cam 50 is configured to cause, by its rotation, the shift forks 53a to 53a engaged to the cam parts (cam grooves 52a to 52c) to move, thereby causing the sliders 440a to 440c to move. The slider 440b is provided to the input shaft 20. The sliders 440a and 440c are provided to the output shaft 30. As described above, the shift cam 50 is configured to cause, by its rotation, the control targets (e.g., the shift forks 53a to 53c) mounted to each of the input shaft 20 and the output shaft 30 to move. The control targets may be provided to the input shaft 20 only or the output shaft 30 only.

In the present embodiment, the shift motor 600 is supported by the support wall 610RW2 of the crankcase 610R. Meanwhile, the clutch motor 700 is supported by the support wall 610LW1 of the crankcase 610L, which is not the crankcase 610R. The shaft part 600b of the shift motor 600 and the shaft part 700b of the clutch motor 700 extend toward opposite sides in the vehicle width direction. Thus, the motor installation position of the shift motor 600 and the motor installation position of the clutch motor 700 do not overlap each other in the front-rear direction and the top-bottom direction. That is, the motor installation positions can be dispersed. In addition, two motors, specifically, the shift motor 600 and the clutch motor 700 are respectively installed to the left and right parts of the left-right split type crankcase in a dispersed manner. Thus, protrusion of the motor installation positions in these parts of the crankcase can be prevented or reduced. Consequently, the whole of the multistage transmission device 13 including the shift motor 600 and the clutch motor 700 can be disposed in a compact manner.

In the present embodiment, the clutch motor 700 is positioned above both the input shaft 20 and the output shaft 30 in the top-bottom direction (Y direction). When seen in the vehicle width direction (Z direction), the clutch motor 700 is disposed such that the shaft part 700b is located between the rotational axis line 90P of the crankshaft 90 and the output shaft 30 in the front-rear direction (X direction) (see FIG. 4). Meanwhile, the shift motor 600 is disposed such that the shaft part 600b is located in rear of the output shaft 30 in the front-rear direction (X direction) and the shaft part 600b is located below the input shaft 20 and the output shaft 30 in the top-bottom direction (Y direction). The output shaft 30 is located between the shaft part 600b and the shaft 50S of the shift cam 50. Consequently, the multistage transmission device 13 is configured such that the clutch motor 700 can be disposed in the upper rear portion of the space SC, in which the output shaft 30 and the driven gears 341 to 345 are stored, and the shift motor 600 can be disposed in the lower rear portion of the space SC. Consequently, the whole of the multistage transmission device 13 including the shift motor 600 and the clutch motor 700 can be disposed in a compact manner.

The terms and expressions used herein are used for explanation, and are not intended to limit the interpretation. Any equivalents of the features indicated and described herein are not excluded, and various modifications should be permitted within the scope of the claims of the present invention. The present invention is defined by the appended claims and it is not limited to the embodiments described in the specification of the present application.

### Reference Signs List

- 1: motorcycle
- 5: rear wheel (driving wheel)
- 6: engine unit
- 11: engine
- 12: clutch
- 13: multistage transmission device
- 20: input shaft
- 30: output shaft
- 50: shift cam
- 90: crankshaft
- 241, 242, 243, 244, 245: driving gear
- 341, 342, 343, 344, 345: driven gear
- 600: shift motor
- 610: crankcase
- 620L, 620R: crankcase cover
- 640: operation power transmission mechanism
- 700: clutch motor
- 710: clutch motor assisting mechanism

## Claims

1. A straddled vehicle (1) comprising:
an engine (11) including
a crankcase (610),
a crankcase cover (620L, 620R) located outward of the crankcase (610) in a vehicle width direction, and
a crankshaft (90) rotatably supported by the crankcase (610);
a multistage transmission device (13); and
a driving wheel (5) configured to rotate to cause the straddled vehicle (1) to run upon reception of drive power outputted from the engine (11) and transmitted via the multistage transmission device (13), wherein
the multistage transmission device (13) includes
an input shaft (20) rotatably supported by the crankcase (610), the input shaft (20) being configured to receive drive power from the crankshaft (90), the input shaft (20) having a plurality of driving gears (241 - 245),
an output shaft (30) rotatably supported by the crankcase (610), the output shaft (30) having a plurality of driven gears (341 - 345) engaged with their corresponding driving gears (241 - 245), the output shaft (30) being configured to output drive power toward the driving wheel (5),
a shift cam (50) configured to rotate to change, among the plurality of driving gears (241 - 245) and the plurality of driven gears (341 - 345), paired driving gear (241 - 245) and driven gear (341 - 345) that transmit the drive power between the input shaft (20) and the output shaft (30),
a shift motor (600) including a body part (600a) and a shaft part (600b) that rotatably protrudes from the body part (600a) and that is configured to output operation power by rotation, the shift motor (600) being configured to cause the shift cam (50) to rotate by causing the shaft part (600b) to rotate for up-shifting or down-shifting such that a rotation direction of the shaft part (600b) for up-shifting and a rotation direction of the shaft part (600b) for down-shifting are opposite to each other,
a starting clutch (12) disposed on a drive power transmission path from the crankshaft (90) to the output shaft (30),
a clutch motor (700) in addition to the shift motor and including a body part (700a) and a shaft part (700b) rotatably protruding from the body part (700a) and being configured to output operation power by rotation, the clutch motor (700) being configured to output operation power for connecting or disconnecting the starting clutch (12), and
an operation power transmission mechanism (640) configured to transmit the operation power from the clutch motor (700) to the starting clutch (12), the operation power transmission mechanism (640) being disposed so as to be at least partially included in a space between the crankcase (610) and the crankcase cover (620L, 620R),
wherein the crankcase (610) has a support wall supporting at least the crankshaft (90), and
the body part (700a) of the clutch motor (700) is supported at least by the support wall.

2. The straddled vehicle (1) according to claim 1, wherein
the crankcase (610) has a support wall supporting at least the output shaft (30) and the input shaft (20), and
the body part (700a) of the clutch motor (700) is mounted to the support wall such that the body part (700a) of the clutch motor (700) is supported at least by the support wall.

3. The straddled vehicle (1) according to claim 1 or 2, wherein
the support wall has an inside surface facing a center of the straddled vehicle (1) in the vehicle width direction, and
the body part (700a) of the clutch motor (700) is mounted to the inside surface of the support wall such that the shaft part (700b) extends outwardly in the vehicle width direction from the body part (700a).

4. The straddled vehicle (1) according to any one of claims 1 to 3, wherein
the crankcase (610) is a left-right split type crankcase, the crankcase (610) is mounted to the straddled vehicle (1) such that a mating plane of the crankcase (610) extends along a front-rear direction, and
the body part (700a) of the clutch motor (700) is disposed to overlap a plane including the mating plane of the crankcase (610).

5. The straddled vehicle (1) according to any one of claims 1 to 4, wherein
the engine (11) has a displacement of 300 cc or less, and
the clutch motor (700) is disposed above the crankshaft (90) of the engine (11) having a displacement of 300 cc or less and the output shaft (30) when seen in the vehicle width direction.

6. The straddled vehicle (1) according to any one of claims 1 to 5, wherein
the clutch motor (700) is disposed such that the shaft part (700b) of the clutch motor (700) is located between the crankshaft (90) and the output shaft (30) in the front-rear direction when seen in the vehicle width direction.

7. The straddled vehicle (1) according to any one of claims 1 to 6, wherein
the operation power transmission mechanism (640) is configured such that, in the space between the crankcase (610) and the crankcase cover (620L, 620R), a path for transmitting the operation power extends from the shaft part (700b) of the clutch motor (700) toward the crankshaft (90) and extends back toward the shaft part (700b) of the clutch motor (700).

8. The straddled vehicle (1) according to any one of claims 1 to 7, further comprising a clutch motor assisting mechanism (710) disposed so as to be included in the space between the crankcase (610) and the crankcase cover (620L, 620R), the clutch motor assisting mechanism (710) being configured to receive operation power transmitted from the operation power transmission mechanism (640), to hold the starting clutch (12) in a connected state or a disconnected state, and to assist operation power for bringing the starting clutch (12) into the disconnected state from the connected state, the operation power being applied by the clutch motor (700).

9. The straddled vehicle (1) according to claim 8, wherein
the clutch motor assisting mechanism (710) includes
a gear (711) configured to receive the operation power transmitted from the operation power transmission mechanism (640) and
a spring mechanism (712) rotatably connected to the gear (711), the spring mechanism (712) being configured to hold the starting clutch (12) in the connected state or the disconnected state and to assist the operation power for bringing the starting clutch (12) into the disconnected state from the connected state, the operation power being applied by the clutch motor (700).

10. The straddled vehicle (1) according to claim 9, wherein
the spring mechanism (712) is configured to give the gear (711) a rotational force for bringing the starting clutch (12) into the connected state or the disconnected state from the connected state.

11. The straddled vehicle (1) according to claim 10, wherein
the spring mechanism (712) is configured to receive a biasing force given by a coil spring (715).

12. The straddled vehicle (1) according to claim 10, wherein
the spring mechanism (712) is configured to receive a biasing force given by a permanent magnet.

## Patentansprüche

1. Ein Spreizsitzfahrzeug (1), das folgende Merkmale aufweist:
einen Motor (11), der Folgendes umfasst:
ein Kurbelgehäuse (610),
eine Kurbelgehäuseabdeckung (620L, 620R), die sich in einer Fahrzeugbreitenrichtung außen von dem Kurbelgehäuse (610) befindet, und
eine Kurbelwelle (90), die von dem Kurbelgehäuse (610) drehbar gelagert wird;
eine Mehrstufenübertragungsvorrichtung (13); und
ein Antriebsrad (5), das dazu konfiguriert ist, sich zu drehen, um zu bewirken, dass sich das Spreizsitzfahrzeug (1) bei Empfang einer Antriebsleistung bewegt, die von dem Motor (11) ausgegeben wird und über die Mehrstufenübertragungsvorrichtung (13) übertragen wird, wobei
die Mehrstufenübertragungsvorrichtung (13) Folgendes umfasst:
eine Eingangswelle (20), die von dem Kurbelgehäuse (610) drehbar gelagert wird, wobei die Eingangswelle (20) dazu konfiguriert ist, Antriebsleistung von der Kurbelwelle (90) zu empfangen, wobei die Eingangswelle (20) eine Mehrzahl von Antriebsgetrieberädern (241 - 245) aufweist,
eine Ausgangswelle (30), die von dem Kurbelgehäuse (610) drehbar gelagert wird, wobei die Ausgangswelle (30) eine Mehrzahl von angetriebenen Getrieberädern (341 - 345) aufweist, die mit ihren entsprechenden Antriebsgetrieberädern (241 - 245) in Eingriff stehen, wobei die Ausgangswelle (30) dazu konfiguriert ist, Antriebsleistung hin zu dem Antriebsrad (5) auszugeben,
einen Schaltnocken (50), der dazu konfiguriert ist, sich zu drehen, um aus der Mehrzahl von Antriebsgetrieberädern (241 - 245) und der Mehrzahl von angetriebenen Getrieberädern (341 - 345) ein gepaartes Antriebsgetrieberad (241 - 245) und angetriebenes Getrieberad (341 - 345) zu ändern, die die Antriebsleistung zwischen der Eingangswelle (20) und der Ausgangswelle (30) übertragen,
einen Schaltmotor (600), der ein Körperteil (600a) und ein Wellenteil (600b) umfasst, das drehbar von dem Körperteil (600a) hervorsteht und dazu konfiguriert ist, eine Betriebsleistung durcheine Drehung auszugeben, wobei der Schaltmotor (600) dazu konfiguriert ist, zu bewirken, dass sich der Schaltnocken (50) dreht, indem bewirkt wird, dass sich das Wellenteil (600b) dreht, zum derartigen Aufwärtsschalten oder Abwärtsschalten, dass eine Drehrichtung des Wellenteils (600b) zum Aufwärtsschalten und eine Drehrichtung des Wellenteils (600b) zum Abwärtsschalten entgegengesetzt sind,
eine Startkupplung (12), die auf einem Antriebsleistungsübertragungspfad von der Kurbelwelle (90) zu der Ausgangswelle (30) angeordnet ist,
ein Kupplungsmotor (700), zusätzlich zu dem Schaltmotor, welcher ein Körperteil (700a) und ein Wellenteil (700b) aufweist, das drehbar von dem Körperteil (700a) hervorsteht und dazu konfiguriert ist, eine Betriebsleistung durch eine Drehung auszugeben, wobei der Kupplungsmotor (700) dazu konfiguriert ist, eine Betriebsleistung zum Verbinden oder Trennen der Startkupplung (12) auszugeben, und
einen Betriebsleistungsübertragungsmechanismus (640), der dazu konfiguriert ist, die Betriebsleistung von dem Kupplungsmotor (700) zu der Startkupplung (12) zu übertragen, wobei der Betriebsleistungsübertragungsmechanismus (640) dazu konfiguriert ist, zumindest teilweise in einem Raum zwischen dem Kurbelgehäuse (610) und der Kurbelgehäuseabdeckung (620L, 620R) enthalten zu sein,
wobei das Kurbelgehäuse (610) eine Haltewand aufweist, die zumindest die Kurbelwelle (90) hält, und
das Körperteil (700a) des Kupplungsmotors (700) zumindest durch die Haltewand gehalten wird.

2. Das Spreizsitzfahrzeug (1) gemäß Anspruch 1, wobei
das Kurbelgehäuse (610) eine Haltewand aufweist, die zumindest die Ausgangswelle (30) und die Eingangswelle (20) stützt, und
das Körperteil (700a) des Kupplungsmotors (700) an der Haltewand derart montiert ist, dass das Körperteil (700a) des Kupplungsmotors (700) zumindest durch die Haltewand gestützt wird.

3. Das Spreizsitzfahrzeug (1) gemäß Anspruch 1 oder 2, wobei
die Haltewand eine Innenoberfläche aufweist, die auf eine Mitte des Spreizsitzfahrzeugs (1) in der Fahrzeugbreitenrichtung zeigt, und
das Körperteil (700a) des Kupplungsmotors (700) an der Innenseitenoberfläche der Haltewand derart montiert ist, dass sich das Wellenteil (700b) in der Fahrzeugbreitenrichtung von dem Körperteil (700a) nach außen erstreckt.

4. Das Spreizsitzfahrzeug (1) gemäß einem der Ansprüche 1 bis 3, wobei
das Kurbelgehäuse (610) ein links-rechts-geteiltes Kurbelgehäuse ist, wobei das Kurbelgehäuse (610) derart an dem Spreizsitzfahrzeug (1) montiert ist, dass sich eine Gegenebene des Kurbelgehäuses (610) entlang einer Vorne-Hinten-Richtung erstreckt, und
das Körperteil (700a) des Kupplungsmotors (700) dahingehend angeordnet ist, eine Ebene, die die Gegenebene des Kurbelgehäuses (610) umfasst, zu überlappen.

5. Das Spreizsitzfahrzeug (1) gemäß einem der Ansprüche 1 bis 4, wobei
der Motor (11) einen Hubraum von 300 cm³ oder weniger aufweist, und
der Kupplungsmotor (700) bei Betrachtung in der Fahrzeugbreitenrichtung über der Kurbelwelle (90) des Motors (11) mit einem Hubraum von 300 cm³ oder weniger und der Ausgangswelle (30) angeordnet ist,

6. Das Spreizsitzfahrzeug (1) gemäß einem der Ansprüche 1 bis 5, wobei
der Kupplungsmotor (700) derart angeordnet ist, dass sich das Wellenteil (700b) des Kupplungsmotors (700) bei Betrachtung in der Fahrzeugbreitenrichtung in der Vorne-Hinten-Richtung zwischen der Kurbelwelle (90) und der Ausgangswelle (30) befindet.

7. Das Spreizsitzfahrzeug (1) gemäß einem der Ansprüche 1 bis 6, wobei
der Betriebsleistungsübertragungsmechanismus (640) derart konfiguriert ist, dass sich in dem Raum zwischen dem Kurbelgehäuse (610) und der Kurbelgehäuseabdeckung (620L, 620R) ein Pfad zur Übertragung der Betriebsleistung von dem Wellenteil (700b) des Kupplungsmotors (700) hin zu der Kurbelwelle (90) erstreckt und sich zurück zu dem Wellenteil (700b) des Kupplungsmotors (700) erstreckt.

8. Das Spreizsitzfahrzeug (1) gemäß einem der Ansprüche 1 bis 7, das ferner einen Kupplungsmotorunterstützungsmechanismus (710) aufweist, der dahingehend angeordnet ist, in dem Raum zwischen dem Kurbelgehäuse (610) und der Kurbelgehäuseabdeckung (620L, 620R) enthalten zu sein, wobei der Kupplungsmotorunterstützungsmechanismus (710) dazu konfiguriert ist, eine Betriebsleistung, die von dem Betriebsleistungsübertragungsmechanismus (640) übertragen wird, zu empfangen, die Startkupplung (12) in einem verbundenen Zustand oder einem getrennten Zustand zu halten, und eine Betriebsleistung zum Bringen der Startkupplung (12) von dem verbundenen Zustand in den getrennten Zustand zu unterstützen, wobei die Betriebsleistung durch den Kupplungsmotor (700) angewendet wird.

9. Das Spreizsitzfahrzeug (1) gemäß Anspruch 8, wobei
der Kupplungsmotorunterstützungsmechanismus (710) Folgendes umfasst:
ein Getrieberad (711), das dazu konfiguriert ist, die Betriebsleistung zu empfangen, die von dem Betriebsleistungsübertragungsmechanismus (640) übertragen wird, und
einen Federmechanismus (712), der mit dem Getrieberad (711) drehbar verbunden ist, wobei der Fehlermechanismus (712) dazu konfiguriert ist, die Startkupplung (12) in dem verbundenen Zustand oder dem getrennten Zustand zu halten und die Betriebsleistung zum Bringen der Startkupplung (12) von dem verbundenen Zustand in den getrennten Zustand zu unterstützen, wobei die Betriebsleistung durch den Kupplungsmotor (700) angewendet wird.

10. Das Spreizsitzfahrzeug (1) gemäß Anspruch 9, wobei
der Federmechanismus (712) dazu konfiguriert ist, dem Getrieberad (711) eine Drehkraft zum Bringen der Startkupplung (12) in den verbundenen Zustand oder in den getrennten Zustand von dem verbundenen Zustand zu verleihen.

11. Das Spreizsitzfahrzeug (1) gemäß Anspruch 10, wobei
der Federmechanismus (712) dazu konfiguriert ist, eine Vorspannkraft zu empfangen, die von einer Spiralfeder (715) verliehen wird.

12. Das Spreizsitzfahrzeug (1) gemäß Anspruch 10, wobei
der Federmechanismus (712) dazu konfiguriert ist, eine Vorspannkraft zu empfangen, die von einem Permanentmagnet verliehen wird.

## Revendications

1. Véhicule à selle (1), comprenant:
un moteur (11) comportant
un carter (610),
un couvercle de carter (620L, 620R) situé à l'extérieur du carter (610) dans une direction de la largeur du véhicule, et
un vilebrequin (90) supporté de manière rotative par le carter (610);
un dispositif de transmission à étages multiples (13); et
une roue d'entraînement (5) configurée pour tourner pour amener le véhicule à selle (1) à circuler à la réception de la puissance d'entraînement sortie par le moteur (11) et transmise par l'intermédiaire du dispositif de transmission à étages multiples (13),
dans lequel
le dispositif de transmission à étages multiples (13) comporte
un arbre d'entrée (20) supporté de manière rotative par le carter (610), l'arbre d'entrée (20) étant configuré pour recevoir la puissance d'entraînement du vilebrequin (90), l'arbre d'entrée (20) présentant une pluralité d'engrenages d'entraînement (241 à 245),
un arbre de sortie (30) supporté de manière rotative par le carter (610), l'arbre de sortie (30) présentant une pluralité d'engrenages entraînés (341 à 345) en prise avec leurs engrenages d'entraînement correspondants (241 à 245), l'arbre de sortie (30) étant configuré pour sortir de la puissance d'entraînement vers la roue d'entraînement (5),
une came de changement de vitesse (50) configurée pour tourner pour changer, parmi la pluralité d'engrenages d'entraînement (241 à 245) et la pluralité d'engrenages entraînés (341 à 345), l'engrenage d'entraînement (241 à 245) et l'engrenage entraîné (341 à 345) associé qui transmettent la puissance d'entraînement entre l'arbre d'entrée (20) et l'arbre de sortie (30),
un moteur de changement de vitesse (600) comportant une partie de corps (600a) et une partie d'arbre (600b) qui ressort de manière rotative de la partie de corps (600a) et qui est configurée pour sortir de la puissance d'actionnement par rotation, le moteur de changement de vitesse (600) étant configuré pour amener la came de changement de vitesse (50) à tourner en amenant la partie d'arbre (600b) à tourner pour passer à la vitesse supérieure ou pour passer à la vitesse inférieure de sorte qu'une direction de rotation de la partie d'arbre (600b) pour passer à la vitesse supérieure et une direction de rotation de la partie d'arbre (600b) pour passer à la vitesse inférieure soient opposées l'une à l'autre,
un embrayage de démarrage (12) disposé sur un trajet de transmission de puissance d'entraînement du vilebrequin (90) à l'arbre de sortie (30),
un moteur d'embrayage (700) en plus du moteur de changement de vitesse et comportant une partie de corps (700a) et une partie d'arbre (700b) ressortant de manière rotative de la partie de corps (700a) et étant configuré pour sortir une puissance d'actionnement par rotation, le moteur d'embrayage (700) étant configuré pour sortir de la puissance d'actionnement pour connecter ou déconnecter l'embrayage de démarrage (12), et
un mécanisme de transmission de puissance d'actionnement (640) configuré pour transmettre la puissance d'actionnement du moteur d'embrayage (700) à l'embrayage de démarrage (12), le mécanisme de transmission de puissance d'actionnement (640) étant disposé de manière à être au moins partiellement inclus dans un espace entre le carter (610) et le couvercle de carter (620L, 620R),
dans lequel le carter (610) présente une paroi de support supportant au moins le vilebrequin (90), et
la partie de corps (700a) du moteur d'embrayage (700) est supportée au moins par la paroi de support.

2. Véhicule à selle (1) selon la revendication 1, dans lequel
le carter (610) présente une paroi de support supportant au moins l'arbre de sortie (30) et l'arbre d'entrée (20), et
la partie de corps (700a) du moteur à embrayage (700) est montée sur la paroi de support de sorte que la partie de corps (700a) du moteur d'embrayage (700) soit supportée au moins par la paroi de support.

3. Véhicule à selle (1) selon la revendication 1 ou 2, dans lequel
la paroi de support présente une surface intérieure faisant face à un centre du véhicule à selle (1) dans la direction de la largeur du véhicule, et
la partie de corps (700a) du moteur d'embrayage (700) est montée sur la surface intérieure de la paroi de support de sorte que la partie d'arbre (700b) s'étende vers l'extérieur dans la direction de la largeur du véhicule à partir de la partie de corps (700a).

4. Véhicule à selle (1) selon l'une quelconque des revendications 1 à 3, dans lequel
le carter (610) est un carter du type divisé gauche-droite, le carter (610) est monté sur le véhicule à selle (1) de sorte qu'un plan d'assemblage du carter (610) s'étende dans une direction avant-arrière, et
la partie de corps (700a) du moteur d'embrayage (700) est disposée de manière è venir en chevauchement avec un plan comportant le plan d'assemblage du carter (610).

5. Véhicule à selle (1) selon l'une quelconque des revendications 1 à 4, dans lequel
le moteur (11) présente une cylindrée de 300 cc ou moins, et
le moteur d'embrayage (700) est disposé au-dessus du vilebrequin (90) du moteur (11) présentant une cylindrée de 300 cc ou moins et de l'arbre de sortie (30), lorsque vu dans la direction de la largeur du véhicule.

6. Véhicule à selle (1) selon l'une quelconque des revendications 1 à 5, dans lequel
le moteur d'embrayage (700) est disposé de sorte que la partie d'arbre (700b) du moteur d'embrayage (700) soit située entre le vilebrequin (90) et l'arbre de sortie (30) dans la direction avant-arrière, lorsque vue dans la direction de la largeur du véhicule.

7. Véhicule à selle (1) selon l'une quelconque des revendications 1 à 6, dans lequel
le mécanisme de transmission de puissance d'actionnement (640) est configuré de sorte que, dans l'espace entre le carter (610) et le couvercle de carter (620L, 620R), un trajet pour transmettre la puissance d'actionnement s'étende de la partie d'arbre (700b) du moteur d'embrayage (700) vers le vilebrequin (90) et s'étende à nouveau vers la partie d'arbre (700b) du moteur d'embrayage (700).

8. Véhicule à selle (1) selon l'une quelconque des revendications 1 à 7, comprenant par ailleurs un mécanisme d'assistance de moteur d'embrayage (710) disposé de manière à être inclus dans l'espace entre le carter (610) et le couvercle de carter (620L, 620R), le mécanisme d'assistance de moteur d'embrayage (710) étant configuré pour recevoir la puissance d'actionnement transmise depuis le mécanisme de transmission de puissance d'actionnement (640), pour maintenir l'embrayage de démarrage (12) dans un état connecté ou un état déconnecté, et pour assister la puissance d'actionnement pour amener l'embrayage de démarrage (12) à l'état déconnecté à partir de l'état connecté, la puissance d'actionnement étant appliquée par le moteur d'embrayage (700).

9. Véhicule à selle (1) selon la revendication 8, dans lequel
le mécanisme d'assistance de moteur d'embrayage (710) comporte
un engrenage (711) configuré pour recevoir la puissance d'actionnement transmise à partir du mécanisme de transmission de puissance d'actionnement (640), et
un mécanisme à ressort (712) connecté de manière rotative à l'engrenage (711), le mécanisme à ressort (712) étant configuré pour maintenir l'embrayage de démarrage (12) dans l'état connecté ou l'état déconnecté et pour assister la puissance d'actionnement pour amener l'embrayage de démarrage (12) à l'état déconnecté à partir de l'état connecté, la puissance d'actionnement étant appliquée par le moteur d'embrayage (700).

10. Véhicule à selle (1) selon la revendication 9, dans lequel
le mécanisme à ressort (712) est configuré pour donner à l'engrenage (711) une force de rotation pour amener l'embrayage de démarrage (12) à l'état connecté ou l'état déconnecté à partir de l'état connecté.

11. Véhicule à selle (1) selon la revendication 10, dans lequel
le mécanisme à ressort (712) est configuré pour recevoir une force de déviation donnée par un ressort hélicoïdal (715).

12. Véhicule à selle (1) selon la revendication 10, dans lequel
le mécanisme à ressort (712) est configuré pour recevoir une force de déviation donnée par un aimant permanent.
